(19) **Europäisches Patentamt European Patent Office Office européen des brevets**

(11) **EP 3 246 842 B1**

(12) **EUROPEAN PATENT SPECIFICATION**

(45) Date of publication and mention of the grant of the patent:
**08.07.2020 Bulletin 2020/28**

(51) Int Cl.:
**G06F 21/56** (2013.01)    **G06F 21/55** (2013.01)

(21) Application number: **17172049.3**

(22) Date of filing: **19.05.2017**

(54) **SYSTEM AND METHOD OF DISTRIBUTING FILES BETWEEN VIRTUAL MACHINES FORMING A DISTRIBUTED SYSTEM FOR PERFORMING ANTIVIRUS SCANS**

SYSTEM UND VERFAHREN ZUM VERTEILEN VON DATEIEN ZWISCHEN VIRTUELLEN MASCHINEN ZUM AUSBILDEN EINES VERTEILTEN SYSTEMS ZUR DURCHFÜHRUNG VON ANTIVIRUS-SCANS

SYSTÈME ET PROCÉDÉ DE DISTRIBUTION DE FICHIERS ENTRE DES MACHINES VIRTUELLES FORMANT UN SYSTÈME RÉPARTI PERMETTANT D'EFFECTUER DES BALAYAGES ANTIVIRUS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.05.2016 RU 2016119518**
**14.02.2017 US 201715432068**

(43) Date of publication of application:
**22.11.2017 Bulletin 2017/47**

(73) Proprietor: **AO Kaspersky Lab**
**Moscow 125212 (RU)**

(72) Inventors:
• **VLAZNEV, Denis O.**
**Moscow 125212 (RU)**
• **VOITOV, Nikita M.**
**Moscow 125212 (RU)**
• **VASILYEV, Maxim A.**
**Moscow 125212 (RU)**
• **NAUMOV, Maxim E.**
**Moscow 125212 (RU)**
• **SEMENOV, Evgeny S.**
**Moscow 125212 (RU)**
• **ONISHCHENKO, Alexander Y.**
**Moscow 125212 (RU)**

(74) Representative: **Chimini, Francesco**
**Jacobacci & Partners S.p.A.**
**Piazza della Vittoria 11**
**25122 Brescia (IT)**

(56) References cited:
**US-A1- 2011 078 318    US-A1- 2011 261 811**
**US-A1- 2012 192 276    US-B1- 8 370 943**
**US-B1- 9 088 618**

EP 3 246 842 B1

## Description

### Field of technology

The invention pertains generally to the field of cybersecurity and, more particularly, to systems and methods of detecting malicious files in a distributed system of virtual machines.

### Background

The rapid development in the past decade of computer technologies, including cloud technologies, and also the widespread use of diverse computing devices (personal computers, notebooks, tablets, smartphones, etc.), has served as a powerful stimulus for the use of these devices in every possible sphere of human activity and for a tremendous number of tasks (from Internet surfing and communication via Internet to bank transfers and electronic document traffic). In parallel with the growth in numbers of computing devices, the volumes of software running on these devices have also grown at a rapid pace, including malicious software.

At present, a huge number of malicious program varieties exist. Some of them may steal personal and confidential data from the devices of users (such as logins and passwords, bank details, electronic documents). Others may form so-called botnets from the devices of users to guess passwords using the brute force method or launch attacks such as a denial of service (Distributed Denial of Service, DDOS) against other computers or computer networks. Still others may foist paid content onto users through aggressive advertising, paid subscriptions, sending of text messages to paid phone numbers, and so forth.

Antivirus programs may be used to defeat malicious programs. An effective solution may require first and foremost a timely detection of files containing the code of malicious programs, for which the antivirus programs may employ various technologies, such as signature, heuristic and proactive analysis, white and black lists, and so forth. Each of the above-mentioned technologies may have its own effectiveness in detecting malicious files, based on its potential ability to detect certain malicious files and on the requirements on the computing resources of the computer system on which the technology running.

At present, the volumes of data (including files) being processed by computer systems are so vast that their antivirus scanning by antivirus programs may take a long time and demand substantial computing resources, which is especially critical for the users of personal computers. Therefore, in order to increase the effectiveness of detection of malicious files, methods of increasing the computing resources of the computer systems on which the search for malicious files takes place may be used. For example, distributed systems may be used to search for malicious files. Such systems may comprise several servers, and on each server only a portion of the files needing to be scanned is scanned. US 2012/192276 A1 discloses a computer program product, system, and method for selecting one of a plurality of scanner nodes to perform scan operations for an interface node receiving a file request. US 8370943 B1 discloses a system which receives a scan request for a storage object in a clustered storage system. The system determines if an anti-virus (AV) server is executed on a preferred node in the storage system. US 9088618 B1 discloses systems and methods for ensuring fault tolerance of antivirus protection realized in a virtual environment.

The known operating methods may be ineffective when there is a heavy workload on the computer systems performing the antivirus scanning of files, or when some of the computer systems taking part in the antivirus scanning of files are malfunctioning.

### Summary

Disclosed are systems and methods of detecting malicious files in a distributed system of virtual machines. In one example, a method for detecting malicious files in a distributed network having a plurality of virtual machines, comprising: determining and obtaining, by a virtual machine of the plurality of virtual machines, at least one file stored on the virtual machine for performing an antivirus scan; collecting, by the virtual machine, data relating to characteristics of computing resources of the plurality of virtual machines and one or more parameters relating to the antivirus scan; determining an approximation time function of the characteristics of the computing resources of the plurality of virtual machines and an approximation function of the one or more parameters relating to the antivirus scan based at least on collected data; determining an approximation time function of effectiveness of the antivirus scan based at least on the approximation time function of the characteristics of the computing resources and the approximation function of the one or more parameters; and beased at least on the approximation time function of effectiveness of the antivirus scan, selecting at least one virtual machine from the plurality of virtual machines to perform the antivirus scan in order to determine whether the at least one file is malicious.

In another example, selecting the at least one virtual machine comprises determining the most effective start time for performing the antivirus scan by fulfilling at least on one of the following criteria: the antivirus scan taking the least time; the antivirus scan taking less time than scheduled; the antivirus scan that will be completed no later than a scheduled time; a minimum number of computing resources of the virtual machine is needed to perform the antivirus scan; or fewer computing resources of the virtual machine than scheduled are needed to perform the antivirus scan.

In yet another example, selecting at least one virtual machine comprises: detecting that the at least one virtual machine is able to at least perform the antivirus scan of the at least one file using computing resources available in a scheduled time slot; detecting the at least one virtual machine with the lowest calculated workload level among the plurality of virtual machines in the distributed network; detecting the at least one virtual machine with a calculated workload level lower than an established threshold value; or detecting no less than two virtual machines of the plurality of virtual machines whose combined calculated workload level is less than the combined workload level of the remaining virtual machines of the plurality of virtual machines.

In another example, collecting the data relating to the characteristics of computing resources of the plurality of virtual machines comprises at least one of: detecting a time period between obtaining the at least one file and determining whether the at least one file is malicious; detecting a number of files transmitted to the virtual machine for the antivirus scan; and determining a computing capacity of each of the plurality of the virtual machines.

In another example, the one or more parameters relating to the antivirus scan comprise at least one of: methods for detecting malicious files used by the plurality of virtual machines, the methods comprising at least one of: a signature analysis, a heuristic analysis, an analysis of emulation results, and an analysis of black and white lists; and the characteristics of computing resources of the plurality of virtual machines used for performing the antivirus scan. The methods for detecting malicious files are determined based at least on the maximum time during which the antivirus scan takes place, and an emulation depth of files being scanned.

In yet another example, the approximation time function of the characteristics of the computing resources of the plurality of virtual machines is determined based at least on the collected data relating to the characteristics of the computing resources of each virtual machine, characteristics of computing resources of each virtual machine which are accessible at a selected time, the time of determination of characteristics of the computing resources of each virtual machine, and the time for which it is necessary to determine the characteristics of the computing resources of each virtual machine.

In yet another example, the approximation function of the one or more parameters relating to the antivirus scan is determined based at least on data relating to presumptive parameters of the antivirus scan for the characteristics of the computing resources, and characteristics of the computing resources of eachvirtual machine for performing the antivirus scan.

In another example aspect, the approximation time function of effectiveness of the antivirus scan is determined based on parameters defining a type and size of the at least one file.

In accordance with examples of the invention, a system for detecting malicious files in a distributed network having a plurality of virtual machines, the system comprising: a virtual machine of the plurality of virtual machines having at least one thin client operating thereon, the virtual machine being configured to: determine and obtain at least one file stored on the virtual machine for performing an antivirus scan; collect data relating to characteristics of computing resources of the plurality of virtual machines and one or more parameters relating to the antivirus scan; determine an approximation time function of the characteristics of the computing resources of the plurality of virtual machines and an approximation function of the one or more parameters relating to the antivirus scan based at least on collected data; determine an approximation time function of effectiveness of the antivirus scan based at least on the approximation time function of the characteristics of the computing resources and the approximation function of the one or more parameters; and beased at least on the approximation time function of effectiveness of the antivirus scan, select at least one virtual machine from the plurality of virtual machines to perform the antivirus scan in order to determine whether the at least one file is malicious.

**Brief description of the drawings**

The accompanying drawings, which are incorporated into and constitute a part of this specification, illustrate one or more example aspects of the present disclosure and, together with the detailed description, serve to explain their principles and implementations.

Fig. 1 illustrates an exemplary system for detecting malicious files on a virtual machine.
Fig. 2 illustrates an exemplary method for detecting malicious files on a virtual machine.
Fig. 3 illustrates the approximation time function of the characteristics of computing resources of protecting virtual machines.
Fig. 4 illustrates the approximation time functions of the characteristics of computing resources of several protecting virtual machines.
Fig. 5 illustrates a computer system, a personal computer or server, on which the disclosed systems and method can be implemented.

## Detailed Description

Example aspects are described herein in the context of a system, method and computer program product for detecting malicious files in a distributed network having a plurality of virtual machines. Those of ordinary skill in the art will realize that the following description is illustrative only and is not intended to be in any way limiting. Other aspects will readily suggest themselves to those skilled in the art having the benefit of this disclosure. Reference will now be made in detail to implementations of the example aspects as illustrated in the accompanying drawings. The same reference indicators will be used to the extent possible throughout the drawings and the following description to refer to the same or like items.

The following definitions will be used in describing various aspects of the invention:

A protected virtual machine may include a virtual machine working under the control of a hypervisor, with an installed guest operating system, in the computational environment of which a thin client is executing.

A protecting virtual machine may be a virtual machine working under the control of a hypervisor, with an installed operating system, in the environment of which a protection server is working.

A thin client may include software configured to protect a protected virtual machine against malicious programs and computer threats and to transmit files for the antivirus scan in the network to the protecting virtual machines.

A protection server may include software configured to perform an antivirus scan of files received from protected virtual machines.

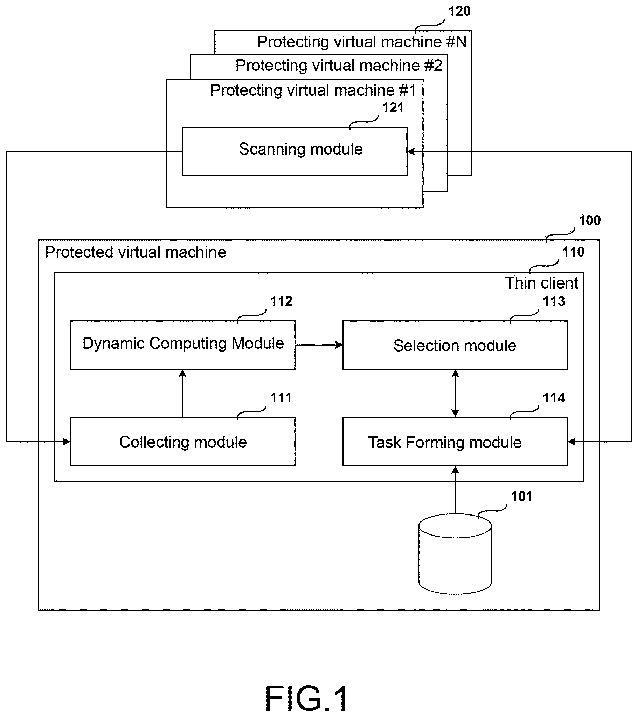

**Fig. 1** illustrates an exemplary system for detection of malicious files on a virtual machine according to aspects of the invention. The structural diagram of the system for detection of malicious files on a virtual machine may include a protected virtual machine 100, a storage of files requiring an antivirus scan 101, a thin client module 110, a collecting module 111, a dynamic computing module 112, a selection module 113, a task forming module 114, a protecting virtual machine 120, and a scanning module 121.

The system for detection of malicious files on a virtual machine may contain a protected virtual machine 100, working under the control of a hypervisor, with an installed guest operating system, in the environment of which a thin client 110 is working, and protecting virtual machines 120, working under the control of a hypervisor and with an installed operating system, in the environment of each of which a scanning module 121 is working.

The protecting virtual machine 120 may be configured to carry out an antivirus scan on files received from the thin client 110, and it may contain the scanning module 121.

The scanning module **121** may be configured to:

- carry out an antivirus scan on files received from the task forming module **114;** and

- pronounce a verdict on the detection of malicious files.

The protected virtual machine 100 may be configured to detect the files requiring an antivirus scan in the storage of files 101 and transfer these to the thin client module 110 for performing an antivirus scan.

The thin client module 110 may be configured to protect the protected virtual machine 100 against malicious files and it may include a collecting module 111, a dynamic computing module 112, a selection module 113, and a task forming module 114.

The collecting module 111 may be configured to:

- collect the characteristics of the computing resources of the protecting virtual machines **120;**
- collect the parameters of the antivirus scan of the scanning module **121,** where the scanning module **121** may be installed on the corresponding protecting virtual machines **120,** the parameters dictating the rules for use by the scanning module **121** of the computing resources of the corresponding protecting virtual machines **120,** wherein the mentioned rules of use dictate which computing resources of the protecting virtual machine **120** may be provided to the scanning module **121** to carry out the particular actions comprising the antivirus scan;
- transmit the collected characteristics of the computing resources and the parameters of the antivirus scan to the dynamic computing module **112.**

The characteristics of the computing resources of the protecting virtual machine **120** may include:

- the time passed between the receiving of the files from the task forming module **114** to the pronouncing of the verdict by the scanning module **121;**
- the number of files transmitted to the scanning module **121** for the antivirus scan;

- the computing capacity of the protecting virtual machine **120** on which the scanning module **121** is running.

For example, the collected characteristics of the computing resources of the protecting virtual machine **120** on which the scanning module **121** is running may be generalized to form a single characteristic of the computing resources of the protecting virtual machine **120,** which may include a set of numbers:

$$\{\Delta,N,\{M,B\}\}_i$$

for each established point in time $t_i$ of transmission of the collected data to the dynamic computing module **112,** where:

$\Delta$ - is the time passed between the reception of the files by the task forming module **114** from the storage of files **101** to the pronouncing of the verdict by the scanning module **121**;

$N$ - is the number of files transmitted to the scanning module **121** to carry out the antivirus scan at the point in time $t_i$;

$M$ - is the volume of free memory of the protecting virtual machine **120** at the point in time $t_i$;

$B$ - is the CPU load of the protecting virtual machine **120** at the point in time $t_i$.

The described set of numbers may be sufficient to calculate a multidimensional approximation function (one of whose coefficients is time) may define the behavior of the scanning module **121**.

The parameters of the antivirus scan being performed by the scanning module **121** may include:

- the methods of detection of malicious files that are used by the scanning module **121** to perform the antivirus scan, where the methods of detection of malicious files may include:

    ○ signature analysis,
    ○ heuristic analysis,
    ○ analysis of emulation results,
    ○ analysis of black and white lists;

- the characteristics of the computing resources, being used by the scanning module **121** to perform the antivirus scan.

The parameters which may define the methods of detection of malicious files may include:

- the maximum time during which the antivirus scan takes place;
- the depth of emulation of the files being scanned.

The computing capacity of the protecting virtual machine **120** on which the scanning module **121** is running may include:

- the RAM of the protecting virtual machine **120** in which the scanning module **121** is running;
- the CPU performance of the protecting virtual machine **120.**

The parameters used by the scanning module **121** to perform the antivirus scan of the files may affect the accuracy of the verdict pronounced by the scanning module **121**, *e.g*., the chance of not detecting a malicious file among malicious files or, conversely, the chance of detecting a malicious file among legitimate files when performing the antivirus scan. For example, the scanning module **121** of the protecting virtual machine #1 **120.1** may perform a scan for each file received from the task forming module **114** with the aid of signature analysis in no more than 0.01 s, the scanning module **121** of the protecting virtual machine #2 **120.2** may use heuristic analysis with a depth of emulation of the files scanned (maximum number of nested calls) equal to 10 in no more than 0.1 s, and the scanning module **121** of the protecting virtual machine #3 **120.3** may use heuristic analysis with a depth of emulation of the files scanned equal to 1000 in no more than 0.04 s. As a result, it turns out that the most effective scanning means, i.e., the scanning means using the largest volume of computing resources of the protecting virtual machine may include using the scanning module **121** running on the protecting virtual machine #3 **120.3,** even though the fastest one may include using the scanning module **121** running on the protecting virtual machine #1 **120.1.**

The dynamic computing module **112** may be configured to:

- determine the approximation time function of the characteristics of the computing resources for each protecting virtual machine **120** on the basis of an analysis of the characteristics of the computing resources collected by the collecting module**111**, where the approximation function in question may be presented as:

$$\{C\}_{t_k} = F_{char}\left(\left\{\{C\}_{t_i} \dots \{C\}_{t_j}\right\}, t_k\right),$$

where:

$F_{char}$      - is the approximation time function,

$\{C\}_{t_{i,j}}$      - are the characteristics of the computing resources of the protecting virtual machine **120** collected by the collecting module **111,**

$\{C\}_{t_k}$      - are the characteristics of the computing resources of the protecting virtual machine **120** which are accessible at the point in time $t_k$,

$t_i, t_j$      - is the time of determination of the characteristics of the computing resources of the protecting virtual machine **120,**

$t_k$      - is the time for which it is necessary to determine the characteristics of the computing resources of the protecting virtual machine **120;**

and it may be defined by the parameters $\alpha_1$, $\alpha_2$,... $\alpha_i$, such that the approximation function in question may be presented in the form:

$$\{C\}_{t_k} = F_{char}(a_1, a_2, \dots, a_i, t_k).$$

- determine the approximation function of the parameters of the antivirus scan of each scanning module**121** in dependence on the characteristics of the computing resources of the corresponding protecting virtual machine **120** on the basis of an analysis of the parameters of the antivirus scan collected by the collecting module**111**, this approximation function may have the following form:

$$\{P\}_{C_k} = F_{params}\left(\left\{\{P\}_{C_i} \dots \{P\}_{C_j}\right\}, C_k\right),$$

where:

$F_{params}$      - is the approximation function,

$\{P\}_{C_{i,j}}$      - are the parameters of the antivirus scan as collected by the collecting module **111,** being dependent on the characteristics of the computing resources $C_i$,

$\{P\}_{C_k}$      - are the presumptive parameters of the antivirus scan for the characteristics of the computing resources $C_k$,

$C_{i,j}$      - are the characteristics of the computing resources of the protecting virtual machine **120,** being used by the scanning module **121** when performing the antivirus scan;

and it may be defined by the parameters $b_1$, $b_2$,... $b_i$, so that the approximation function in question may be presented in the form:

$$\{P\}_{C_k} = F_{params}(b_1, b_2, \dots, b_i, C_k).$$

- determine the approximation time function of the effectiveness of the antivirus scan on each protecting virtual machine **120** as a composition (function composition) of the determined functions, where the function composition is a function obtained by applying one function to the results of another function, the effectiveness of the antivirus scan characterizing the volume of computing resources needed by the protecting virtual machine **120** to achieve the established result of the antivirus scan, the approximation function in question having the form:

$$E = F_{efficiency}(\{F\}, \{C\}, \{P\}),$$

where:

$F_{efficiency}$     - is the approximation function,

$\{F\}$     - are parameters characterizing the files received by the task forming module **114,** where the parameters may define:

- the file type, and
- the file size,

$\{C\}$     - are parameters describing the approximation time function of the characteristics of the computing resources of the protecting virtual machine **120,**

$\{P\}$     - are parameters describing the approximation function of the parameters of the antivirus scan performed by the scanning module**121** in dependence on the characteristics of the computing resources of the protecting virtual machine **120;**

and it may be defined by the parameters $e_1$, $e_2$,... $e_i$, such that the approximation function in question may be presented in the form:

$$E_{t_k} = F_{efficiency}(e_1, e_2, ..., e_i, t_k).$$

- and transmit the determined approximation time function for the effectiveness of the antivirus scan on each protecting virtual machine **120** to the selection module **113.**

The parameters defining the approximation time function of the characteristics of the computing resources of the protecting virtual machine **120** may be the numerical coefficients for the approximation function of the kind:

$$F_{CHAR}\left(\left\{\{C\}_{t_i} ... \{C\}_{t_j}\right\}\right) = a_i \times C^i + a_{i+1} \times C^{i+1} + \cdots + a_j \times C^j,$$

where:

$\{C\}_{t_i}$     - are the characteristics of the computing resources of the protecting virtual machine **120** collected by the collecting module**111,**

$t_i$     - is the time of gathering the characteristics of the computing resources of the protecting virtual machine **120,**

$\alpha_i$     - are numerical coefficients describing the approximation function.

The parameters defining the approximation function of the parameters of the antivirus scan being performed by the scanning module **121** in dependence on the characteristics of the computing resources of the protecting virtual machine **120** may include numerical coefficients for the approximation function of the kind:

$$F_{PARAMS}\left(\left\{\{P\}_{t_i} ... \{P\}_{t_j}\right\}\right) = b_i \times P^i + b_{i+1} \times P^{i+1} + \cdots + b_j \times P^j,$$

where:

$\{P\}_{C_i}$   - are the parameters of the antivirus scan being performed by the scanning module **121** as collected by the collecting module **111,**

$C_i$   - are the characteristics of the computing resources of the protecting virtual machine **120,**

$b_i$   - are numerical coefficients defining the approximation function.

The workload level of the scanning module **121** of the protecting virtual machines **120** may act as the effectiveness of the antivirus scan on the protecting virtual machine **120.**

The workload level of the scanning module **121** of the protecting virtual machine **120** may be calculated as the superposition of the set of parameters defining the approximation time function of the characteristics of the computing resources of the protecting virtual machine **120** and the set of parameters defining the approximation function of the parameters of the antivirus scan being performed by the scanning module **121** in dependence on the characteristics of the computing resources of the protecting virtual machine **120,** having the form:

$$F_{BUSY}(\{F\}, \{C\}, \{P\}) = C(\{F\}) \times P(\{F\}),$$

where:

$\{F\}$   - are parameters characterizing the files received by the task forming module **114,**

$\{C\}$   - are parameters defining the approximation time function of the characteristics of the computing resources of the protecting virtual machine **120,**

$\{P\}$   - are parameters describing the approximation function of the parameters of the antivirus scan being performed by the scanning module **121** in dependence on the characteristics of the computing resources of the protecting virtual machine **120.**

Regression analysis methods may be used to calculate the parameters in defining the approximation time functions.

For example, in the case where the RAM volume used to perform the antivirus scan of files is the characteristic of the computing resources of the protecting virtual machine **120,** a linear function may be determined as the approximation function, as described by the formula:

$$F(X) = a_1 \times X + a_2$$

In this case, the parameters $\alpha_1$, $\alpha_2$ may be calculated as:

$$a_1 = \frac{n \times \sum_{i=1}^{n} t_i \times X_i - \sum_{i=1}^{n} t_i \times \sum_{i=1}^{n} X_i}{n \times \sum_{i=1}^{n} t_i^2 - \left(\sum_{i=1}^{n} t_i\right)^2},$$

$$a_2 = \frac{\sum_{i=1}^{n} X_i - a_1 \times \sum_{i=1}^{n} t_i}{n},$$

where:

$n$   - is the number of timestamps during which values of the RAM volume being used in the performance of the antivirus scan were obtained,

$t_i$   - is the timestamp of obtaining a value of the RAM volume $X_i$ being used to perform the antivirus scan,

$X_i$   - is the value of the RAM volume $X_i$ being used to perform the antivirus scan at the point in time $t_i$.

The selection module **113** may be configured to:

- select the scanning module **121** on the basis of the effectiveness function of the antivirus scan obtained from the dynamic computing module **112;**
- determine for the selected scanning module **121** the start time for the performance of the antivirus scan such that at least one of the following criteria may be fulfilled:

∘ the antivirus scan takes the least time;
∘ the antivirus scan takes less time than scheduled;
∘ the antivirus scan will be completed not later than the scheduled time;
∘ a minimum number of computing resources of the protecting virtual machine **120** is needed to perform the antivirus scan;
∘ fewer computing resources of the protecting virtual machine **120** than scheduled are needed to perform the antivirus scan;

- send information on the selected scanning module **121** to the task forming module **114,** containing the most effective start time for performance of the antivirus scan by the selected scanning module **121.**

The selected scanning module **121** may include:

- the scanning means able to at least perform the antivirus scan of the files determined by the task forming module **114,** using the computing resources available in the scheduled time slot;
- the scanning module **121** with the lowest calculated workload level;
- the scanning module **121** with a calculated workload level lower than an established threshold value;
- if an antivirus scan of not less than two files is needed, at least two scanning module **121** out of the set of scanning module **121** whose combined calculated workload level is less than the combined workload level of the remaining scanning module **121.**

For example, the workload level of the scanning module **121** may be determined and calculated as follows: there are 3 files of size 10 MB, 20 MB and 50 MB, respectively, for which it is necessary to perform an antivirus scan; the scanning module **121** has presented parameters describing the antivirus scan as a signature analysis taking at most 0.01 s, while the characteristic of the protecting virtual machine **120** on which the scanning module **121** is running may have an available RAM volume of 60 MB. Signature analysis means that the file will be placed in the RAM as is, i.e., it will take up the same volume as its size. In order for the workload of the scanning module **121** to be at maximum, it needs to transmit the aforementioned 3 files in two stages: in the first stage, file #1 and file #3, in the second stage, file #2. As a result, the antivirus scan of all three files will take 0.02 s, the workload level of the scanning module **121** will be 1 and 0.3(3), respectively, and the resulting workload for the mentioned three files will be 0.6(6), which is the most optimal result, given that during the scanning of file #2 the scanning module **121** will have sufficient computing resources to process new files. In the present case, the workload level may be calculated as:

$$F_{BUSY}\left(\{F\}, \{C\}, \{P\}\right) = FILE_{SIZE} \times SERVER_{TIME} \times MEMORY_{FREE}.$$

The task forming module **114** may be configured to:

- determine the files of the protected virtual machine **100** on which the thin client module **110** is running for performance of the antivirus scan;
- send commands to the collecting module **111** to perform the collection of the characteristics of the computing resources of the protecting virtual machines **120** and the parameters of the antivirus scan of the scanning module **121;** and
- transfer the determined files to the scanning module **121,** the information on which has been provided by the selection module **113,** according to the scanning time as determined by the selection module **113.**

For example, in the case where the scanning module **121** of the protecting virtual machine **120** has been selected, the antivirus scan of the file may be performed at once or after a certain time. In the event that the scanning module **121** is already performing an antivirus scan of files received from the task forming module **113** prior to this, the antivirus scan of the new file may not be done, and the file may be stored (for example, on the hard drive of the protecting virtual machine **120**) until the antivirus scan being performed is finished, after which the file may be loaded from the hard drive into memory, and the scanning module **121** may perform the antivirus scan. In the described working logic of the scanning module **121,** two time-consuming but non-mandatory operations (if the work is organized properly) may be performed - the writing of the file to disk and the reading of the file from disk. But if the mentioned file is dispatched to the scanning module **121** not right after the selection of the scanning module **121,** but during a later time when the scanning module **121** may have performed its previous tasks, the antivirus scan of the file may be performed more quickly.
In one example, detecting of malicious files of a distribution of 1000 files, of total volume 1 GB, by a thin client **110** of a protected virtual machine **100** among three protecting virtual machines **120 (120.1, 120.2** and **120.3)** may be performned.Scanning module **121** for performing an antivirus scan may employ signature analysis, heuristic analysis, and an analysis according to white and black lists, respectively. Each type of the aforementioned analysis methods may have its own effectiveness (0.6, 0.95 and 0.1, respectively) and may require its own computing resources (200 MB of free RAM, CPU with operating speed not less than 100 MFLOPS plus 50 MB of free RAM and CPU with operating speed not less than 10 MFLOPS plus 10 MB of free RAM, respectively), which means that on average each scanning module **121** may process the file in 0.01, 0.1 and 0.002 s, respectively.

In the beginning, when no statistics on the working of the protecting virtual machine **120** may be available, the files may be distributed uniformly by the task forming module **114** in accordance with how fast the given protecting virtual machine **120** may perform the antivirus scan. In the course of time, the dynamic computing module **112** may accumulate statistics on the characteristics of the computing resources and the parameters of the antivirus scan of all the protecting virtual machines **120** at different points in time, which makes it possible to calculate the approximation functions of the characteristics and the parameters.

For the protecting virtual machine **#1120.1,** only the volume of free RAM may be important, the change in which obeys the linear time law $M(t) = \alpha_1 \times t + \alpha_2$. On the basis of the collected data $\{M_i, t_i\}$, the parameters $\alpha_1$ and $\alpha_2$ may be calculated by the method of least squares, which makes it possible to predict how much available RAM the protecting virtual machine #1 **120.1** may have at the time $t_i$ of sending of the file for performance of the antivirus scan to the scanning module **121** of the protecting virtual machine #1 **120.1.** Knowing how much RAM may be available at any given point in time, the task forming module **114** may estimate which files maybe sent to the scanning module **121** in order for those files to be processed in a minimum time.

Similar steps are taken for the protecting virtual machine #2 **120.2** and #3 **120.3,** where besides the RAM the CPU operating speed may also be used. By estimating the CPU load of the protecting virtual machine **120,** which obeys the law $B(t) = \alpha_1 \times t^3 + \alpha_2 \times t^2 + \alpha_3 \times t + \alpha_4$, the parameters $\alpha_1, \alpha_2, \alpha_3, \alpha_4$ may be calculated. After this, the CPU load of the protecting virtual machine **120** at the time $t_i$ of sending the file for performance of the antivirus scan to the scanning module **121** of the protecting virtual machine #2 **120.2** (or #3 **120.3**) is predicted. In this way, one achieves the effect that the CPU of the protecting virtual machine **120** has a maximum effective load.

As a result of the distribution of tasks among the scanning module **121** of the various protecting virtual machines **120,** an increase in the speed of performance of the antivirus scan for the files of the protected virtual machine **100** may be accomplished, since the protecting virtual machines **120** may be used with higher effectiveness than in the case of a uniform or random distribution of files among the protecting virtual machines **120.**

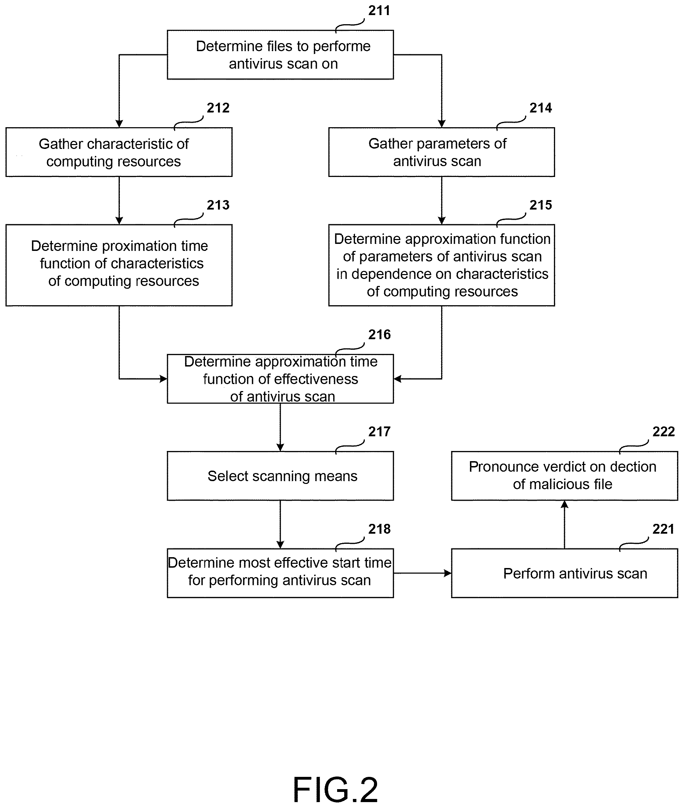

Fig. 2 illustrates an exemplary method for detecting malicious files on a virtual machine according to aspects of the invention. The structural diagram of the method of detection of malicious files on a virtual machine may comprise the step **211,** in which files may be determined for performance of the antivirus scan, step **212,** in which the characteristics of the computing resources may be collected, step **213,** in which the approximation time function may be determined for the characteristics of the computing resources, step **214,** in which the parameters of the antivirus scan may be collected, step **215,** in which the approximation function may be determined for the parameters of the antivirus scan in dependence on the characteristics of the computing resources, step **216,** in which the approximation time function may be determined for the effectiveness of the antivirus scan, step **217,** in which the scanning module **121** may be selected, step **218** in which the most effective start time may be determined for performing the antivirus scan, step **221,** in which the antivirus scan may be performed, and step **222,** in which a verdict may be pronounced as to the detection of a malicious file.

In step **211,** the files stored in the storage of files **101** of the protected virtual machine **100** on which the aforementioned thin client **110** is running may be determined for the performance of the antivirus scan.

In step **212,** the characteristics of the computing resources of the protecting virtual machine **120** on which the scanning module **121** is running may be determined and collected.

In one example, step **212** may be performed at the same time as step **214.**

The characteristics of the computing resources of the protecting virtual machine **120** may include:

- the time passed between the receiving of the files from the task forming module **114** to the pronouncing of the verdict by the scanning module **121;**
- the number of files transmitted to the scanning module **121** for the antivirus scan; and
- the computing capacity of the protecting virtual machine **120** on which the scanning module **121** is running.

The computing capacity of the protecting virtual machine **120** on which the scanning module **121** is running may include:

- the RAM of the protecting virtual machine **120** in which the scanning module **121** is running;
- the CPU performance of the protecting virtual machine **120.**

In step **213,** the approximation time function of the characteristics of the computing resources for each protecting virtual machine **120** may be determined on the basis of an analysis of the characteristics of the computing resources collected in step **212,** where the approximation function in question may have the form:

$$\{C\}_{t_k} = F_{char}\left(\left\{\{C\}_{t_i} \dots \{C\}_{t_j}\right\}, t_k\right),$$

where:

$F_{char}$     - is the approximation time function,

$\{C\}_{t_{i,j}}$     - are the characteristics of the computing resources of the protecting virtual machine **120** collected in step **212,**

$\{C\}_{t_k}$     - are the characteristics of the computing resources of the protecting virtual machine **120** which are accessible at the point in time $t_k$,

$t_i, t_j$     - is the time of determination of the characteristics of the computing resources of the protecting virtual machine **120,**

$t_k$     - is the time for which it is necessary to determine the characteristics of the computing resources of the protecting virtual machine **120;**

and it may be defined by the parameters $\alpha_1, \alpha_2, \dots \alpha_i$, such that the approximation function in question may be presented in the form:

$$\{C\}_{t_k} = F_{char}(a_1, a_2, \dots, a_i, t_k).$$

The parameters defining the approximation time function of the characteristics of the computing resources of the protecting virtual machine **120** may include the numerical coefficients for the approximation function of the kind:

$$F_{CHAR}\left(\left\{\{C\}_{t_i} \dots \{C\}_{t_j}\right\}\right) = a_i \times C^i + a_{i+1} \times C^{i+1} + \dots + a_j \times C^j,$$

where:

$\{C\}_{t_i}$     - are the characteristics of the computing resources of the protecting virtual machine **120** collected by the collecting module **111,**

$t_i$     - is the time of gathering the characteristics of the computing resources of the protecting virtual machine **120,**

$\alpha_i$     - are numerical coefficients describing the approximation function.

Regression analysis methods may be used to calculate the parameters describing the approximation time functions.

In step **214,** the parameters of the antivirus scan of the scanning module **121** which may be installed on the corresponding protecting virtual machines **120** may be determined, these parameters dictating the rules of use by the scanning module **121** of the computing resources of the corresponding protecting virtual machines **120.**

In one example, step **214** may be performed at the same time as step **212.**

The parameters of the antivirus scan being performed by the scanning module **121** may include:

- the methods of detection of malicious files that are used by the scanning module **121** to perform the antivirus scan, where the methods of detection of malicious files may include:

    ○ signature analysis,
    ○ heuristic analysis,
    ○ analysis of emulation results, and

○ analysis of black and white lists;

- the characteristics of the computing resources, the characteristics being used by the scanning module **121** to perform the antivirus scan.

The parameters which may define the methods of detection of malicious files may include:

- the maximum time during which the antivirus scan takes place; and
- the depth of emulation of the files being scanned.

In step **215,** the approximation function of the parameters of the antivirus scan of each scanning module **121** in dependence on the characteristics of the computing resources of the corresponding protecting virtual machine **120** may be determined on the basis of an analysis of the parameters of the antivirus scan collected in step **214,** this approximation function having the form:

$$\{P\}_{C_k} = F_{params}\left(\left\{\{P\}_{C_i} \dots \{P\}_{C_j}\right\}, C_k\right),$$

where:

$F_{params}$  - is the approximation function,

$\{P\}_{C_{i,j}}$  - are the parameters of the antivirus scan as collected by the collecting module **111,** being dependent on the characteristics of the computing resources $C_i$,

$\{P\}_{C_k}$  - are the presumptive parameters of the antivirus scan for the characteristics of the computing resources $C_k$,

$C_{i,j}$  - are the characteristics of the computing resources of the protecting virtual machine **120,** being used by the scanning module **121** when performing the antivirus scan;

and being defined by the parameters $b_1, b_2, \dots b_i$, so that the approximation function in question may be presented in the form:

$$\{P\}_{C_k} = F_{params}(b_1, b_2, \dots, b_i, C_k).$$

The parameters defining the approximation function of the parameters of the antivirus scan being performed by the scanning module **121** in dependence on the characteristics of the computing resources of the protecting virtual machine **120** may include numerical coefficients for the approximation function of the kind:

$$F_{PARAMS}\left(\left\{\{P\}_{t_i} \dots \{P\}_{t_j}\right\}\right) = b_i \times P^i + b_{i+1} \times P^{i+1} + \dots + b_j \times P^j,$$

where:

$\{P\}_{C_i}$  - are the parameters of the antivirus scan being performed by the scanning module **121** as collected by the collecting module **111,**

$C_i$  - are the characteristics of the computing resources of the protecting virtual machine **120,**

$b_i$ -  are numerical coefficients defining the approximation function.

In step **216,** the approximation time function of the effectiveness of the antivirus scan on each protecting virtual machine **120** may be determined as a composition of the functions determined in steps **213** and **215,** where the function composition may include a function obtained by applying one function to the results of another function, the effectiveness of the antivirus scan characterizing the volume of computing resources needed by the protecting virtual machine **120** to achieve the established result of the antivirus scan, the approximation function in question having the form:

$$E = F_{efficiency}(\{F\}, \{C\}, \{P\}),$$

where:

$F_{efficiency}$    - is the approximation function,

$\{F\}$    - are parameters characterizing the files received by the task forming module **114,** where the parameters may include:

- the file type, and
- the file size,

$\{C\}$    - are parameters describing the approximation time function of the characteristics of the computing resources of the protecting virtual machine **120,**

$\{P\}$    - are parameters describing the approximation function of the parameters of the antivirus scan performed by the scanning module **121** in dependence on the characteristics of the computing resources of the protecting virtual machine **120;**

and it may be defined by the parameters $e_1$, $e_2$,... $e_i$, such that the approximation function in question may be presented in the form:

$$E_{t_k} = F_{efficiency}(e_1, e_2, ..., e_i, t_k).$$

The workload level of the scanning module **121** of the protecting virtual machines **120** may act as the effectiveness of the antivirus scan on the protecting virtual machine **120.**

The workload level of the scanning module **121** of the protecting virtual machine **120** may be calculated as the superposition of the set of parameters defining the approximation time function of the characteristics of the computing resources of the protecting virtual machine **120** and the set of parameters defining the approximation function of the parameters of the antivirus scan being performed by the scanning module **121** in dependence on the characteristics of the computing resources of the protecting virtual machine **120,** having the form:

$$F_{BUSY}(\{F\}, \{C\}, \{P\}) = C(\{F\}) \times P(\{F\}),$$

where:

$\{F\}$    - are parameters characterizing the files received by the task forming module **114,**

$\{C\}$    - are parameters describing the approximation time function of the characteristics of the computing resources of the protecting virtual machine **120,**

$\{P\}$    - are parameters describing the approximation function of the parameters of the antivirus scan being performed by the scanning module **121** in dependence on the characteristics of the computing resources of the protecting virtual machine **120.**

In step 217, the scanning module 121 may be configured to select a suitable scanning module in a distributed network having a plurality of protected and protecting virtual machines on the basis of the effectiveness function of the antivirus scan obtained in step **216.**

The selected scanning module **121** may be configured to determine:

- a scanning module of one of the plurality of protecting virtual machines in the distributed network that is able to at least perform the antivirus scan of the files determined by the task forming module **114,** using the computing resources available in the scheduled time slot;
- the scanning module **121** with the lowest calculated workload level;

- one scanning module **121** with a calculated workload level lower than an established threshold value;
- no less than two scanning module **121** out of the set of scanning module **121** whose combined calculated workload level is less than the combined workload level of the remaining scanning module **121** out of the set of scanning module **121.**

In step **218,** the start time for performing the antivirus scan may be determined for the scanning module **121** selected in step **217,** so that at least one of the following criteria may be fulfilled:

- the antivirus scan takes the least time;
- the antivirus scan takes less time than scheduled;
- the antivirus scan will be completed not later than the scheduled time;
- a minimum number of computing resources of the protecting virtual machine **120** is needed to perform the antivirus scan;
- fewer computing resources of the protecting virtual machine **120** than scheduled are needed to perform the antivirus scan;

In step **221,** the antivirus scan may be performed on the files determined in step **211.**

In step **222,** a verdict may be pronounced as to the detection of malicious files.

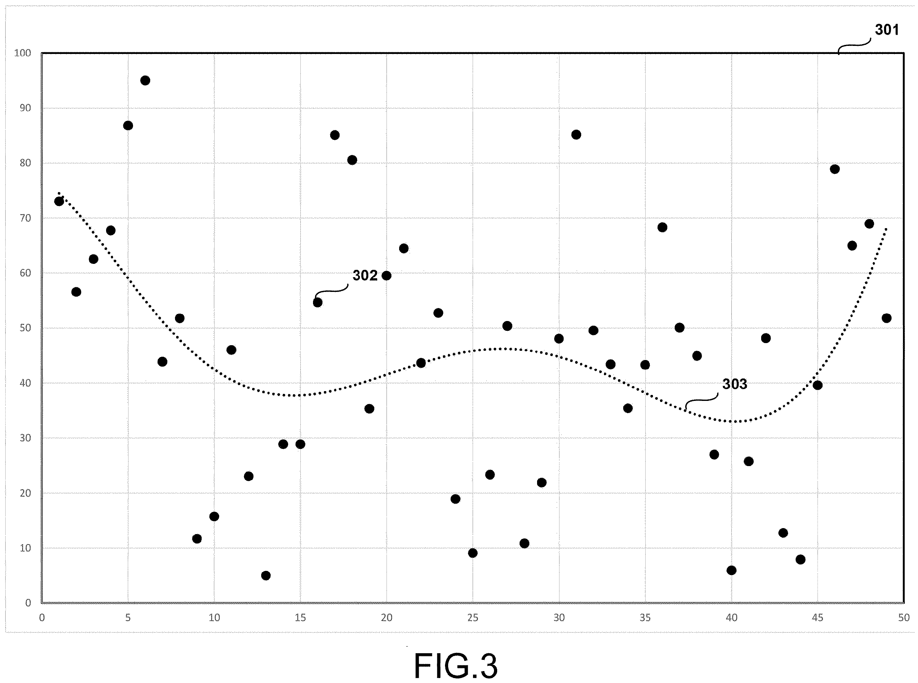

**Fig. 3** illustrates the approximation time function of the characteristics of computing resources of protecting virtual machines according to aspects of the invention. The graph of the approximation time function of the characteristics of the computing resources of the protecting virtual machines **301** may contain the time characteristics of the computing resources of the protecting virtual machine **302** and the plotted approximation function **303.**

The approximation time function **301** of the characteristics of the computing resources of the protecting virtual machine **120** may be determined by the dynamic computing module **112,** which works as part of the thin client **110** on the protected virtual machine **100,** on the basis of data characterizing the protecting virtual machine **120,** obtained from the collecting module **111,** which works as part of the aforementioned thin client **110.**

The time characteristics of the computing resources of the protecting virtual machine **302** may include the workload level of the CPU of the protecting virtual machine (expressed in percent, from 0% to 100%) in dependence on time (expressed in seconds, from 0 to 50).

The characteristics of the computing resources of the protecting virtual machine **302** are available for 49 times-tamps $\{X\}_{t_i}$. The problem is to construct an approximation function **303** with which one may calculate the presumptive workload of the protecting virtual machine at time $t_{50}$. For this purpose, one may employ one of several methods of regression analysis, such as the method of least squares.

In the first step, one of the functions defining the approximation function may be selected, such as a polynomial function of $6^{th}$ degree:

$$F_{CHAR}(X) = a_1 \times X^1 + a_2 \times X^2 + \cdots + a_6 \times X^6.$$

In the next step, the system of equations may be solved to calculate the coefficients of the equation $F_{CHAR}(X)$ $\alpha_1 \ldots \alpha_6$, so that the condition may be fulfilled:

$$\sum_{t_i} \left( X_{t_i} - F_{CHAR}(X) \right)^2 \to \min_X (a_1 \ldots a_6).$$

After the coefficients $\alpha_1 \ldots \alpha_6$ have been calculated, and knowing the value of time $t_{50}$, the value of the presumptive CPU load of the protecting virtual machine may be calculated. For the data depicted in the graph **301** for time $t_{50}$ = 50s, this may amount to $X_{50}$ = 85%.

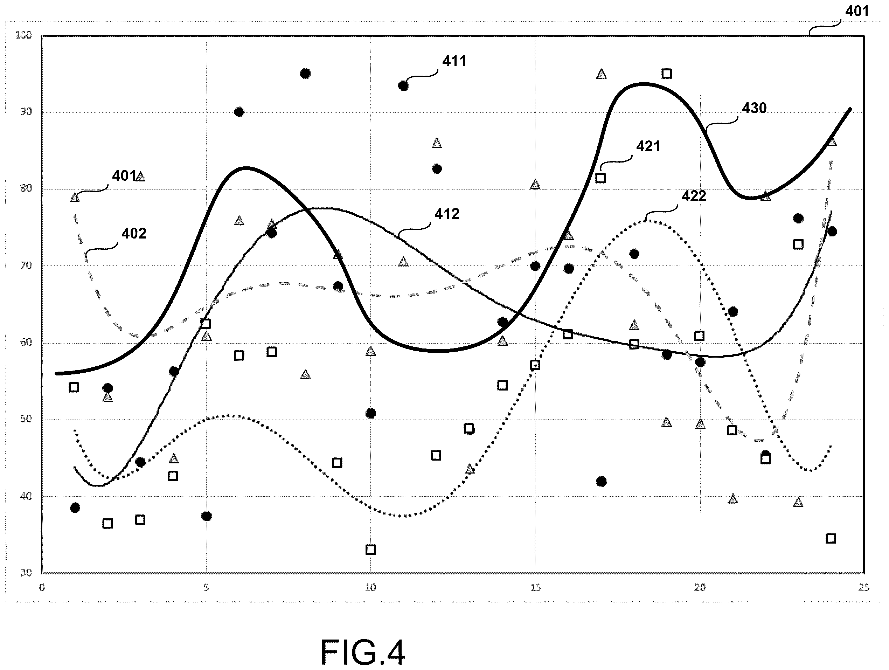

**Fig. 4** illustrates the approximation time functions of the characteristics of computing resources of several protecting virtual machines according to apsects of the invention. The graph of the approximation time functions of the characteristics of the computing resources of several protecting virtual machines **400** may contain the time characteristics of the computing resources of the protecting virtual machines **401, 411** and **421,** the approximation functions **402, 412** and **422** respectively plotted on the basis of an analysis of the time characteristics of the computing resources of the protecting virtual machines, and the resulting combined approximation function **430.**

The approximation time functions **402, 412** and **422** of the characteristics of the computing resources of the protecting virtual machines **120.1, 120.2** and **120.3** respectively may be determined by the dynamic computing module **112,** operating as part of the thin client **110** on the protected virtual machine **100** on the basis of the data characterizing the protecting virtual machines **120.1, 120.2** and **120.3** and obtained from the collecting module **111,** operating as part of the aforementioned thin client **110.**

The approximation time functions of the characteristics of the computing resources of the protecting virtual machines **401, 411** and **421** may be obtained by the methods discussed in the description of **Fig. 3.**

The time characteristics of the computing resources of the protecting virtual machines **401, 411** and **421** may include the workload level of the CPU of each of the protecting virtual machine (expressed in percent, from 0% to 100%) in dependence on time (expressed in seconds, from 0 to 25).

After calculating the approximation time functions of the CPU load of each protecting virtual machine, the approximation function of the combined load of the CPUs of the system of all protecting virtual machines **430** may be calculated:

$$X_j = \sum_i \{a_j\}_i.$$

For the selection of the time of sending the file for scanning to the protection server **120** of one of the protecting virtual machines, it may be necessary to determine when the combined load of the CPUs of all the protecting virtual machines may be at minimum. Knowing the time of minimum combined load of the CPUs of the protecting virtual machines, the protecting virtual machine with the minimum CPU load out of all available protecting virtual machines may be selected, and its protection server **120** may be sent the file for performance of an antivirus scan.

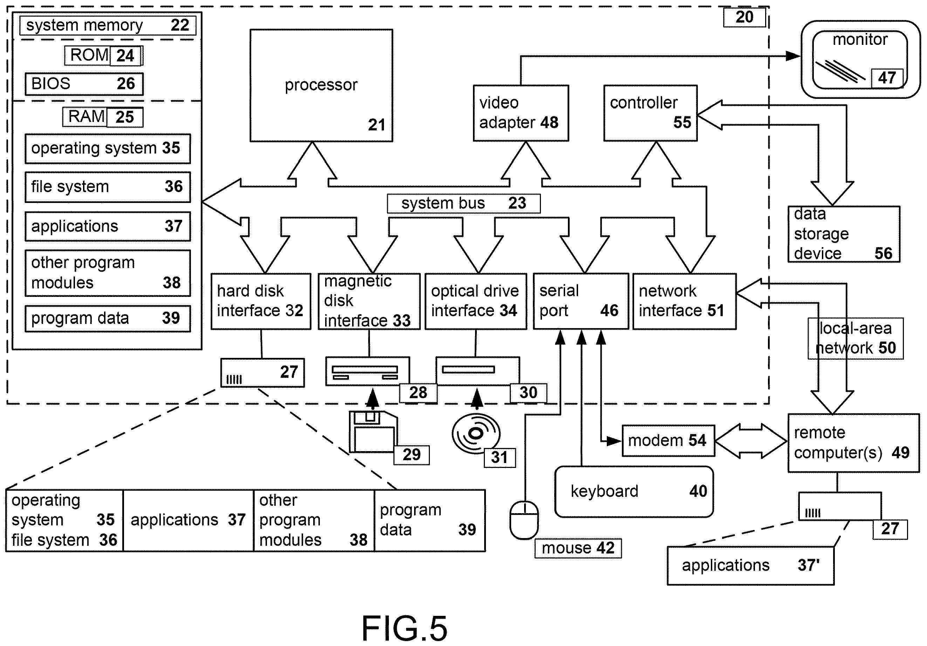

**Fig. 5** illustrates an example computer system (which may be a personal computer or a server) on which the disclosed systems and methods can be implemented according to aspects of the invention. As shown, the computer system **20** (which may be a personal computer or a server) includes a central processing unit **21,** a system memory **22** and a system bus **23** connecting the various system components, including the memory associated with the central processing unit **21.** As will be appreciated by those of ordinary skill in the art, the system bus **23** may comprise a bus memory or bus memory controller, a peripheral bus, and a local bus that is able to interact with any other bus architecture. The system memory may include permanent memory (ROM) **24** and random-access memory (RAM) **25.** The basic input/output system (BIOS) **26** may store the basic procedures for transfer of information between elements of the computer system **20,** such as those at the time of loading the operating system with the use of the ROM **24.**

The computer system **20,** may also comprise a hard disk **27** for reading and writing data, a magnetic disk drive **28** for reading and writing on removable magnetic disks 29, and an optical drive **30** for reading and writing removable optical disks **31,** such as CD-ROM, DVD-ROM and other optical media. The hard disk **27,** the magnetic disk drive **28,** and the optical drive **30** are connected to the system bus **23** across the hard disk interface **32,** the magnetic disk interface **33** and the optical drive interface **34,** respectively. The drives and the corresponding computer information media are power-independent modules for storage of computer instructions, data structures, program modules and other data of the computer system **20.**

The computer system **20** further comprises a hard disk **27,** a removable magnetic disk **29** and a removable optical disk **31** connected to the system bus **23** via the controller **55.** It will be understood by those of ordinary skill in the art that any type of media **56** that is able to store data in a form readable by a computer (solid state drives, flash memory cards, digital disks, random-access memory (RAM) and so on) may also be utilized.

The computer system **20** has a file system **36,** in which the operating system **35,** may be stored, as well as additional program applications **37,** other program modules **38,** and program data **39.** A user of the computer system **20** may enter commands and information using keyboard 40, mouse 42, or any other input device known to those of ordinary skill in the art, such as, but not limited to, a microphone, joystick, game controller, scanner, *etc..* Such input devices typically plug into the computer system **20** through a serial port **46,** which in turn is connected to the system bus, but those of ordinary skill in the art will appreciate that input devices may be also be connected in other ways, such as, without limitation, via a parallel port, a game port, or a universal serial bus (USB). A monitor **47** or other type of display device may also be connected to the system bus **23** across an interface, such as a video adapter **48.** In addition to the monitor **47,** the personal computer may be equipped with other peripheral output devices (not shown), such as loudspeakers, a printer, *etc.*

Computer system **20** may operate in a network environment, using a network connection to one or more remote computers **49.** The remote computer (or computers) **49** may be local computer workstations or servers comprising most or all of the aforementioned elements in describing the nature of a computer system **20.** Other devices may also be present in the computer network, such as, but not limited to, routers, network stations, peer devices or other network nodes.

Network connections can form a local-area computer network (LAN) **50** and a wide-area computer network (WAN). Such networks are used in corporate computer networks and internal company networks, and they generally have access to the Internet. In LAN or WAN networks, the personal computer **20** is connected to the local-area network **50** across a network adapter or network interface **51.** When networks are used, the computer system **20** may employ a modem **54** or other modules well known to those of ordinary skill in the art that enable communications with a wide-area computer network such as the Internet. The modem **54,** which may be an internal or external device, may be connected to the system bus **23** by a serial port **46.** It will be appreciated by those of ordinary skill in the art that said network connections are non-limiting examples of numerous well-understood ways of establishing a connection by one computer to another using communication modules.

In various aspects, the systems and methods described herein may be implemented in hardware, software, firmware, or any combination thereof. If implemented in software, the methods may be stored as one or more instructions or code on a non-transitory computer-readable medium. Computer-readable medium includes data storage. By way of example, and not limitation, such computer-readable medium can comprise RAM, ROM, EEPROM, CD-ROM, Flash memory or other types of electric, magnetic, or optical storage medium, or any other medium that can be used to carry or store desired program code in the form of instructions or data structures and that can be accessed by a processor of a general purpose computer.

In various aspects, the systems and methods described in the present disclosure can be addressed in terms of modules. The term "module" as used herein refers to a real-world device, component, or arrangement of components implemented using hardware, such as by an application specific integrated circuit (ASIC) or field-programmable gate array (FPGA), for example, or as a combination of hardware and software, such as by a microprocessor system and a set of instructions to implement the module's functionality, which (while being executed) transform the microprocessor system into a special-purpose device. A module may also be implemented as a combination of the two, with certain functions facilitated by hardware alone, and other functions facilitated by a combination of hardware and software. In certain implementations, at least a portion, and in some cases, all, of a module may be executed on the processor of a general purpose computer (such as the one described in greater detail in Fig. *4, supra*). Accordingly, each module may be realized in a variety of suitable configurations, and should not be limited to any particular implementation exemplified herein.

In the interest of clarity, not all of the routine features of the aspects are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and time-consuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of the skilled in the relevant art(s). Moreover, it is not intended for any term in the specification or claims to be ascribed an uncommon or special meaning unless explicitly set forth as such.

The invention is specified in the appended claims.

**Claims**

1. A computer implemented method for detecting malicious files in a distributed network having a plurality of protecting virtual machines (120), the method comprising:

   determining and obtaining (211), by a protected virtual machine (100), at least one file stored on the protected virtual machine (100) for performing an antivirus scan;
   collecting (212), by the protected virtual machine (100), data relating to characteristics of computing resources of each of the plurality of protecting virtual machines (120), each having a scanning module (121), wherein the characteristics of computing resources of each of the protecting virtual machines (120) comprise at least one or more of:

      - time passed between reception of files and pronouncing a verdict by each scanning module (121),
      - a number of files obtained,
      - CPU load, and
      - a volume of free memory;

   determining (213), by the protected virtual machine (100), a first approximation time function of the characteristics of the computing resources for each of the plurality of protecting virtual machines based at least on the collected data;
   collecting (214), by the protected virtual machine (100), one or more parameters relating to an antivirus scan of the scanning module (121) of each of the protecting virtual machines, wherein the one or more parameters comprises at least one of:

- methods of detection of malicious files used to perform the antivirus scan, and
- characteristics of the computing resources used to perform the antivirus scan;

determining (215), by the protected virtual machine (100), a second approximation function of the one or more parameters relating to the antivirus scan based at least on the collected parameters;

determining (216) an approximation time function of effectiveness of the antivirus scan of each protecting virtual machine based at least on the first approximation time function of the characteristics of the computing resources and the second approximation function of the one or more parameters; and

based at least on the approximation time function of effectiveness of the antivirus scan, selecting (217) at least one protecting virtual machine from the plurality of protecting virtual machines to perform the antivirus scan in order to determine whether the at least one file is malicious.

2. The method of claim 1, wherein selecting the at least one protecting virtual machine (120) comprises determining (218) the most effective start time for performing the antivirus scan by fulfilling at least on one of the following criteria:

the antivirus scan taking the least time;
the antivirus scan taking less time than scheduled;
the antivirus scan that will be completed no later than a scheduled time;
a minimum number of computing resources of the protecting virtual machine (120) is needed to perform the antivirus scan; or
fewer computing resources of the protecting virtual machine (120) than scheduled are needed to perform the antivirus scan.

3. The method of claim 1, wherein selecting at least one protecting virtual machine (120) comprises:

detecting that the at least one protecting virtual machine (120) is able to at least perform the antivirus scan of the at least one file using computing resources available in a scheduled time slot;
detecting the at least one protecting virtual machine (120) with the lowest calculated workload level among the plurality of protecting virtual machines (120) in the distributed network;
detecting the at least one protecting virtual machine (120) with a calculated workload level lower than an established threshold value; or
detecting no less than two protecting virtual machines (120) of the plurality of protecting virtual machines (120) whose combined calculated workload level is less than the combined workload level of the remaining protecting virtual machines (120) of the plurality of protecting virtual machines (120).

4. The method of claim 1, wherein collecting the data relating to the characteristics of computing resources of each of the plurality of protecting virtual machines (120) comprises at least one of:

detecting a time period between obtaining the at least one file and determining whether the at least one file is malicious;
detecting a number of files transmitted to the protected virtual machine (100) for the antivirus scan; and
determining a computing capacity of each of the plurality of the protecting virtual machines (120).

5. The method of claim 1, wherein the methods for detecting malicious files comprise at least one of: a signature analysis, a heuristic analysis, an analysis of emulation results, and an analysis of black and white lists.

6. The method of claim 5, wherein the methods for detecting malicious files are determined based at least on the maximum time during which the antivirus scan takes place, wherein the methods for detecting malicious files comprise an analysis of emulation results and are determined based on an emulation depth of files being scanned, wherein an emulation depth is a maximum number of nested calls.

7. The method of claim 1, wherein the approximation time function of the characteristics of the computing resources of the plurality of protecting virtual machines (120) is determined based at least on the collected data relating to the characteristics of the computing resources of each protecting virtual machine (120), characteristics of computing resources of each protecting virtual machine (120) which are accessible at a selected time, the time of determination of characteristics of the computing resources of each protecting virtual machine (120), and the time for which it is necessary to determine the characteristics of the computing resources of each protecting virtual machine (120).

8. The method of claim 1, wherein the approximation time function of the one or more parameters relating to the antivirus scan is determined based at least on data relating to presumptive parameters of the antivirus scan for the characteristics of the computing resources, and characteristics of the computing resources of each protecting virtual machine (120) for performing the antivirus scan.

9. The method of claim 1, wherein the approximation time function of effectiveness of the antivirus scan is further determined based on parameters defining a type and size of the at least one file.

10. A system for detecting malicious files in a distributed network having a plurality of protecting virtual machines (120), the system comprising:

   a protected virtual machine (100) having at least one thin client (110) operating thereon, the protected virtual machine (100) being configured to:

      determine and obtain (211) at least one file stored on the protected virtual machine (100) for performing an antivirus scan;
      collect (212) data relating to characteristics of computing resources of each of the plurality of protecting virtual machines (120), each having a scanning module (121), wherein the characteristics of computing resources of each of the protecting virtual machines (120) comprise at least one or more of:

         - time passed between reception of files and pronouncing a verdict by each scanning module (121),
         - a number of files obtained,
         - CPU load, and
         - a volume of free memory;

      determine (213) a first approximation time function of the characteristics of the computing resources for the plurality of protecting virtual machines based at least on the collected data;
      collect (214) one or more parameters relating to an antivirus scan of the scanning module (121) of each of the protecting virtual machines, wherein the one or more parameters comprises at least one of:

         - methods of detection of malicious files used to perform the antivirus scan, and
         - characteristics of the computing resources used to perform the antivirus scan;

      determine (215) a second approximation function of the one or more parameters relating to the antivirus scan based at least on the collected parameters;
      determine an approximation time function of effectiveness of the antivirus scan of each protecting virtual machine based at least on the first approximation time function of the characteristics of the computing resources and the second approximation function of the one or more parameters; and
      based at least on the approximation time function of effectiveness of the antivirus scan, select at least one protecting virtual machine (120) from the plurality of protecting virtual machines (120) to perform the antivirus scan in order to determine whether the at least one file is malicious.

11. The system of claim 10, wherein the protected virtual machine (100) is configured to select the at least one protecting virtual machine (120) from the plurality of protecting virtual machines (120) to perform the antivirus scan by determining the most effective start time for performing the antivirus scan by fulfilling at least on one of the following criteria:

   the antivirus scan taking the least time;
   the antivirus scan taking less time than scheduled;
   the antivirus scan that will be completed no later than a scheduled time;
   a minimum number of computing resources of the protecting virtual machine (120) is needed to perform the antivirus scan; or
   fewer computing resources of the protecting virtual machine (120) than scheduled are needed to perform the antivirus scan.

12. The system of claim 10, wherein the protected virtual machine (100) is configured to select the at least one protecting virtual machine (120) from the plurality of protecting virtual machines (120) to perform the antivirus scan by:

detecting that the at least one protecting virtual machine (120) is able to at least perform the antivirus scan of the at least one file using computing resources available in a scheduled time slot;
detecting the at least one protecting virtual machine (120) with the lowest calculated workload level among the plurality of protecting virtual machines (120) in the distributed network;
detecting the at least one protecting virtual machine (120) with a calculated workload level lower than an established threshold value; or
detecting no less than two protecting virtual machines (120) of the plurality of protecting virtual machines (120) whose combined calculated workload level is less than the combined workload level of the remaining protecting virtual machines (120) of the plurality of protecting virtual machines (120).

13. The system of claim 10, wherein the protected virtual machine (100) is configured to collect the data relating to the characteristics of computing resources of the plurality of protecting virtual machines (120) via at least one of:

detecting a time period between obtaining the at least one file and determining whether the at least one file is malicious;
detecting a number of files transmitted to the virtual machine for the antivirus scan; and
determining a computing capacity of each of the plurality of the virtual machines.

14. The system of claim 10, wherein the one or more parameters relating to the antivirus scan comprise at least one of:

methods for detecting malicious files used by the plurality of protecting virtual machines (120), the methods comprising at least one of: a signature analysis, a heuristic analysis, an analysis of emulation results, and an analysis of black and white lists; and
the characteristics of computing resources of the plurality of protecting virtual machines (120) used for performing the antivirus scan.

15. The system of claim 14, wherein the methods for detecting malicious files are determined based at least on the maximum time during which the antivirus scan takes place, and an emulation depth of files being scanned, wherein an emulation depth is a maximum number of nested calls.

16. The system of claim 10, wherein the approximation time function of the characteristics of the computing resources of the plurality of protecting virtual machines (120) is determined based at least on the collected data relating to the characteristics of the computing resources of each protecting virtual machine (120), characteristics of computing resources of each protecting virtual machine (120) which are accessible at a selected time, the time of determination of characteristics of the computing resources of each protecting virtual machine (120), and the time for which it is necessary to determine the characteristics of the computing resources of each protecting virtual machine (120).

17. The system of claim 10, wherein the approximation time function of the one or more parameters relating to the antivirus scan is determined based at least on data relating to presumptive parameters of the antivirus scan for the characteristics of the computing resources, and characteristics of the computing resources of each protecting virtual machine (120) for performing the antivirus scan.

18. The system of claim 10, wherein the approximation time function of effectiveness of the antivirus scan is further determined based on parameters defining a type and size of the at least one file.

19. A non-transitory computer readable medium storing thereon computer executable instructions for detecting malicious files in a distributed network having a plurality of protecting virtual machines (120), including instructions for:

determining and obtaining (211), by a protected virtual machine (100), at least one file stored on the protected virtual machine (100) for performing an antivirus scan;
collecting (212), by the protected virtual machine (100), data relating to characteristics of computing resources of each of the plurality of protecting virtual machines (120), each having a scanning module (121), wherein the characteristics of computing resources of each of the protecting virtual machines (120) comprise at least one or more of:

- time passed between reception of files and pronouncing a verdict by each scanning module (121),

- a number of files obtained,
- CPU load, and
- a volume of free memory;

determining (213), by the protected virtual machine (100), a first approximation time function of the characteristics of the computing resources for each of the plurality of protecting virtual machines (120) based at least on the collected data;

collecting (214), by the protected virtual machine (100), one or more parameters relating to an antivirus scan of the scanning module (121) of each of the protecting virtual machines (120), wherein the one or more parameters comprises at least one of:

- methods of detection of malicious files used to perform the antivirus scan, and
- characteristics of the computing resources used to perform the antivirus scan;

determining (215), by the protected virtual machine (100), a second approximation function of the one or more parameters relating to the antivirus scan based at least on the collected parameters;

determining (216) an approximation time function of effectiveness of the antivirus scan of each protecting virtual machine (120) based at least on the first approximation time function of the characteristics of the computing resources and the second approximation function of the one or more parameters; and

based at least on the approximation time function of effectiveness of the antivirus scan, selecting (217) at least one protecting virtual machine (120) from the plurality of protecting virtual machines (120) to perform the antivirus scan in order to determine whether the at least one file is malicious.

20. The computer readable medium of claim 19,
wherein the approximation time function of the characteristics of the computing resources of the plurality of protecting virtual machines (120) is determined based at least on the collected data relating to the characteristics of the computing resources of each protecting virtual machine (120), characteristics of computing resources of each protecting virtual machine (120) which are accessible at a selected time, the time of determination of characteristics of the computing resources of each protecting virtual machine (120), and the time for which it is necessary to determine the characteristics of the computing resources of each virtual machine, and
wherein the approximation time function of the one or more parameters relating to the antivirus scan is determined based at least on data relating to presumptive parameters of the antivirus scan for the characteristics of the computing resources, and characteristics of the computing resources of each protecting virtual machine (120) for performing the antivirus scan.

**Patentansprüche**

1. Computerimplementiertes Verfahren zum Detektieren schädlicher Dateien in einem verteilten Netzwerk mit einer Mehrzahl schützender virtueller Maschinen (120), wobei das Verfahren umfasst:

Bestimmen und Erhalten (211), durch eine geschützte virtuelle Maschine (100), zumindest einer auf der geschützten virtuellen Maschine (100) gespeicherten Datei zum Durchführen eines Antivirenscans;

Sammeln (212), durch die geschützte virtuelle Maschine (100), von Daten, die sich auf Merkmale von Rechenressourcen jeder der Mehrzahl schützender virtueller Maschinen (120) beziehen, die jeweils ein Scanmodul (121) aufweisen, wobei die Merkmale von Rechenressourcen jeder der schützenden virtuellen Maschinen (120) zumindest eines oder mehrere umfassen:

- Zeit zwischen dem Empfang von Dateien und der Verkündung eines Urteils durch jedes Scanmodul (121);
- eine Reihe von erhaltenen Dateien,
- CPU-Auslastung und
- ein Volumen an freiem Speicher;

Bestimmen (213), durch die geschützte virtuelle Maschine (100), einer ersten Näherungszeitfunktion der Merkmale der Rechenressourcen für jede der Mehrzahl schützender virtueller Maschinen basierend auf zumindest den gesammelten Daten;

Sammeln (214), durch die geschützte virtuelle Maschine (100), eines oder mehrerer Parameter, die sich auf einen Antivirenscan des Scanmoduls (121) jeder der schützenden virtuellen Maschinen beziehen, wobei der eine oder die mehreren Parameter zumindest eines der folgenden umfassen:

- Verfahren zum Detektieren schädlicher Dateien, die zum Durchführen des Antivirenscans verwendet werden, und
- Merkmale der Rechenressourcen, die zum Durchführen des Antivirenscans verwendet werden;

Bestimmen (215), durch die geschützte virtuelle Maschine (100), einer zweiten Näherungsfunktion des einen oder der mehreren Parameter, die sich auf den Antivirenscan beziehen, basierend auf zumindest den gesammelten Parametern;

Bestimmen (216) einer Näherungszeitfunktion der Wirksamkeit des Antivirenscans jeder schützenden virtuellen Maschine basierend auf zumindest der ersten Näherungszeitfunktion der Merkmale der Rechenressourcen und der zweiten Näherungsfunktion des einen oder der mehreren Parameter; und

Basierend zumindest auf der Näherungszeitfunktion der Wirksamkeit des Antivirenscans, Auswählen (217) zumindest einer schützenden virtuellen Maschine aus der Mehrzahl schützender virtueller Maschinen, um den Antivirenscan durchzuführen, um zu bestimmen, ob die zumindest eine Datei schädlich ist.

2. Verfahren nach Anspruch 1, wobei das Auswählen der zumindest einen schützenden virtuellen Maschine (120) das Bestimmen (218) der effektivsten Startzeit zum Durchführen des Antivirenscans umfasst, indem zumindest eines der folgenden Kriterien erfüllt ist:

der Antivirenscan benötigt die wenigste Zeit;
der Antivirenscan benötigt weniger Zeit als geplant;
der Antivirenscan, der spätestens zu einem geplanten Zeitpunkt abgeschlossen wird;
eine minimale Anzahl von Rechenressourcen der schützenden virtuellen Maschine (120) ist erforderlich, um den Antivirenscan durchzuführen; oder
weniger Rechenressourcen der schützenden virtuellen Maschine (120) als geplant werden für die Durchführung des Antivirenscans benötigt.

3. Verfahren nach Anspruch 1, wobei das Auswählen zumindest einer schützenden virtuellen Maschine (120) umfasst:

Detektieren, dass die zumindest eine schützende virtuelle Maschine (120) in der Lage ist, zumindest den Antivirenscan der zumindest einen Datei unter Verwendung von Rechenressourcen durchzuführen, die in einem geplanten Zeitfenster verfügbar sind;
Detektieren der zumindest einen schützenden virtuellen Maschine (120) mit dem niedrigsten berechneten Arbeitslastniveau unter der Mehrzahl schützender virtueller Maschinen (120) in dem verteilten Netzwerk;
Detektieren der zumindest einen schützenden virtuellen Maschine (120) mit einem berechneten Arbeitslastniveau, das niedriger als ein festgelegter Schwellenwert ist; oder
Detektieren von nicht weniger als zwei schützenden virtuellen Maschinen (120) der Mehrzahl schützender virtueller Maschinen (120), deren kombiniertes berechnetes Arbeitslastniveau geringer ist als das kombinierte Arbeitslastniveau der verbleibenden schützenden virtuellen Maschinen (120) der Mehrzahl schützender virtueller Maschinen (120).

4. Verfahren nach Anspruch 1, wobei das Sammeln der Daten, die sich auf die Merkmale von Rechenressourcen jeder der Mehrzahl schützender virtueller Maschinen (120) beziehen, zumindest eines umfasst:

Detektieren eines Zeitraums zwischen dem Erhalten der zumindest einen Datei und dem Bestimmen, ob die zumindest eine Datei schädlich ist;
Detektieren einer Anzahl von Dateien, die an die geschützte virtuelle Maschine (100) für den Antivirenscan übertragen werden; und
Bestimmen einer Rechenkapazität jeder der Mehrzahl schützender virtueller Maschinen (120).

5. Verfahren nach Anspruch 1, wobei die Verfahren zum Detektieren schädlicher Dateien zumindest eines umfassen: eine Signaturanalyse, eine heuristische Analyse, eine Analyse von Emulationsergebnissen und eine Analyse von Schwarz-Weiß-Listen.

6. Verfahren nach Anspruch 5, wobei die Verfahren zum Detektieren schädlicher Dateien basierend auf zumindest der maximalen Zeit bestimmt werden, während der der Antivirenscan stattfindet, wobei die Verfahren zum Detektieren schädlicher Dateien eine Analyse von Emulationsergebnissen umfassen und basierend auf einer Emulationstiefe von gescannten Dateien bestimmt werden, wobei eine Emulationstiefe eine maximale Anzahl verschachtelter Aufrufe ist.

7. Verfahren nach Anspruch 1, wobei die Näherungszeitfunktion der Merkmale der Rechenressourcen der Mehrzahl schützender virtueller Maschinen (120) zumindest basierend auf den gesammelten Daten, die sich auf die Merkmale der Rechenressourcen jeder schützenden virtuellen Maschine (120) beziehen, Merkmalen der Rechenressourcen jeder schützenden virtuellen Maschine (120), auf die zu einem ausgewählten Zeitpunkt zugegriffen werden kann, dem Zeitpunkt der Bestimmung der Merkmale der Rechenressourcen jeder schützenden virtuellen Maschine (120) und der Zeit bestimmt wird, für die es ist notwendig, die Merkmale der Rechenressourcen jeder schützenden virtuellen Maschine (120) zu bestimmen.

8. Verfahren nach Anspruch 1, wobei die Näherungszeitfunktion des einen oder der mehreren Parameter, die sich auf den Antivirenscan beziehen, zumindest basierend auf Daten, die sich auf präsumtive Parameter des Antivirenscans für die Merkmale der Rechenressourcen beziehen, und Merkmalen der Rechenressourcen jeder schützenden virtuellen Maschine (120) zum Durchführen des Antivirenscans bestimmt wird.

9. Verfahren nach Anspruch 1, wobei die Näherungszeitfunktion der Wirksamkeit des Antivirenscans ferner basierend auf Parametern bestimmt wird, die einen Typ und eine Größe der zumindest einen Datei definieren.

10. System zum Detektieren schädlicher Dateien in einem verteilten Netzwerk mit einer Mehrzahl schützender virtueller Maschinen (120), wobei das System umfasst:
eine geschützte virtuelle Maschine (100), auf der zumindest ein Thin Client (110) arbeitet, wobei die geschützte virtuelle Maschine (100) konfiguriert ist zum:

Bestimmen und Erhalten (211) zumindest einer auf der geschützten virtuellen Maschine (100) gespeicherten Datei zum Durchführen eines Antivirenscans;
Sammeln (212) von Daten, die sich auf Merkmale von Rechenressourcen jeder der Mehrzahl schützender virtueller Maschinen (120) beziehen, die jeweils ein Scanmodul (121) aufweisen, wobei die Merkmale von Rechenressourcen jeder der schützenden virtuellen Maschinen (120) zumindest eines oder mehrere umfassen:

- Zeit zwischen dem Empfang von Dateien und der Verkündung eines Urteils durch jedes Scanmodul (121);
- eine Reihe von erhaltenen Dateien,
- CPU-Auslastung und
- ein Volumen an freiem Speicher;

Bestimmen (213) einer ersten Näherungszeitfunktion der Merkmale der Rechenressourcen für jede der Mehrzahl schützender virtueller Maschinen basierend auf zumindest den gesammelten Daten;
Sammeln (214) eines oder mehrerer Parameter, die sich auf einen Antivirenscan des Scanmoduls (121) jeder der schützenden virtuellen Maschinen beziehen, wobei der eine oder die mehreren Parameter zumindest eines der folgenden umfassen:

- Verfahren zum Detektieren schädlicher Dateien, die zum Durchführen des Antivirenscans verwendet werden, und
- Merkmale der Rechenressourcen, die zum Durchführen des Antivirenscans verwendet werden;

Bestimmen (215), durch die geschützte virtuelle Maschine (100), einer zweiten Näherungsfunktion des einen oder der mehreren Parameter, die sich auf den Antivirenscan beziehen, basierend auf zumindest den gesammelten Parametern;
Bestimmen (216) einer Näherungszeitfunktion der Wirksamkeit des Antivirenscans jeder schützenden virtuellen Maschine basierend auf zumindest der ersten Näherungszeitfunktion der Merkmale der Rechenressourcen und der zweiten Näherungsfunktion des einen oder der mehreren Parameter; und
basierend auf der Näherungszeitfunktion der Wirksamkeit des Antivirenscans, Auswählen zumindest einer schützenden virtuellen Maschine (120) aus der Mehrzahl schützender virtueller Maschinen (120), um den Antivirenscan durchzuführen, um zu bestimmen, ob die zumindest eine Datei schädlich ist.

11. System nach Anspruch 10, wobei die geschützte virtuelle Maschine (100) konfiguriert ist, die zumindest eine schützende virtuelle Maschine (120) aus der Mehrzahl schützender virtueller Maschinen (120) auszuwählen, um den Antivirenscan durchzuführen, und zwar durch Bestimmen der effektivsten Startzeit zum Durchführen des Antivirenscans, indem zumindest eines der folgenden Kriterien erfüllt ist:

der Antivirenscan benötigt die wenigste Zeit;
der Antivirenscan benötigt weniger Zeit als geplant;
der Antivirenscan, der spätestens zu einem geplanten Zeitpunkt abgeschlossen wird;
eine minimale Anzahl von Rechenressourcen der schützenden virtuellen Maschine (120) ist erforderlich, um den Antivirenscan durchzuführen; oder
weniger Rechenressourcen der schützenden virtuellen Maschine (120) als geplant werden für die Durchführung des Antivirenscans benötigt.

12. System nach Anspruch 10, wobei die geschützte virtuelle Maschine (100) konfiguriert ist, die zumindest eine schützende virtuelle Maschine (120) aus der Mehrzahl schützender virtueller Maschinen (120) auszuwählen, um den Antivirenscan durchzuführen, durch:

Detektieren, dass die zumindest eine schützende virtuelle Maschine (120) in der Lage ist, zumindest den Antivirenscan der zumindest einen Datei unter Verwendung von Rechenressourcen durchzuführen, die in einem geplanten Zeitfenster verfügbar sind;
Detektieren der zumindest einen schützenden virtuellen Maschine (120) mit dem niedrigsten berechneten Arbeitslastniveau unter der Mehrzahl schützender virtueller Maschinen (120) in dem verteilten Netzwerk;
Detektieren der zumindest einen schützenden virtuellen Maschine (120) mit einem berechneten Arbeitslastniveau, das niedriger als ein festgelegter Schwellenwert ist; oder
Detektieren von nicht weniger als zwei schützenden virtuellen Maschinen (120) der Mehrzahl schützender virtueller Maschinen (120), deren kombiniertes berechnetes Arbeitslastniveau geringer ist als das kombinierte Arbeitslastniveau der verbleibenden schützenden virtuellen Maschinen (120) der Mehrzahl schützender virtueller Maschinen (120).

13. System nach Anspruch 10, wobei die geschützte virtuelle Maschine (100) konfiguriert ist, die Daten zu sammeln, die sich auf die Merkmale von Rechenressourcen der Mehrzahl schützender virtueller Maschinen (120) beziehen, über zumindest eines von:

Detektieren eines Zeitraums zwischen dem Erhalten der zumindest einen Datei und dem Bestimmen, ob die zumindest eine Datei schädlich ist;
Detektieren einer Anzahl von Dateien, die an die geschützte virtuelle Maschine (100) für den Antivirenscan übertragen werden; und
Bestimmen einer Rechenkapazität jeder der Mehrzahl schützender virtueller Maschinen.

14. System nach Anspruch 10, wobei der eine oder die mehreren Parameter, die sich auf den Antivirenscan beziehen, zumindest eines umfassen:

Verfahren zum Detektieren schädlicher Dateien, die von der Mehrzahl schützender virtueller Maschinen (120) verwendet werden, wobei die Verfahren zumindest eines umfassen: eine Signaturanalyse, eine heuristische Analyse, eine Analyse von Emulationsergebnissen und eine Analyse von Schwarz-Weiß-Listen; und
Merkmale von Rechenressourcen der Mehrzahl schützender virtueller Maschinen (120), die zum Durchführen des Antivirenscans verwendet werden.

15. System nach Anspruch 14, wobei die Verfahren zum Detektieren schädlicher Dateien basierend auf zumindest der maximalen Zeit, während der der Antivirenscan stattfindet, und einer Emulationstiefe von gescannten Dateien bestimmt werden, wobei eine Emulationstiefe eine maximale Anzahl verschachtelter Aufrufe ist.

16. System nach Anspruch 10, wobei die Näherungszeitfunktion der Merkmale der Rechenressourcen der Mehrzahl schützender virtueller Maschinen (120) zumindest basierend auf den gesammelten Daten, die sich auf die Merkmale der Rechenressourcen jeder schützenden virtuellen Maschine (120) beziehen, Merkmalen der Rechenressourcen jeder schützenden virtuellen Maschine (120), auf die zu einem ausgewählten Zeitpunkt zugegriffen werden kann, dem Zeitpunkt der Bestimmung der Merkmale der Rechenressourcen jeder schützenden virtuellen Maschine (120) und der Zeit bestimmt wird, für die es ist notwendig, die Merkmale der Rechenressourcen jeder schützenden virtuellen Maschine (120) zu bestimmen.

17. System nach Anspruch 10, wobei die Näherungszeitfunktion des einen oder der mehreren Parameter, die sich auf den Antivirenscan beziehen, zumindest basierend auf Daten, die sich auf präsumtive Parameter des Antivirenscans für die Merkmale der Rechenressourcen beziehen, und Merkmalen der Rechenressourcen jeder schützenden virtuellen Maschine (120) zum Durchführen des Antivirenscans bestimmt wird.

18. System nach Anspruch 10, wobei die Näherungszeitfunktion der Wirksamkeit des Antivirenscans ferner basierend auf Parametern bestimmt wird, die einen Typ und eine Größe der zumindest einen Datei definieren.

19. Nicht flüchtiges computerlesbares Medium, auf dem computerausführbare Anweisungen zum Detektieren schädlicher Dateien in einem verteilten Netzwerk mit einer Mehrzahl schützender virtueller Maschinen (120), einschließlich Anweisungen zum:

Bestimmen und Erhalten (211), durch eine geschützte virtuelle Maschine (100), zumindest einer auf der geschützten virtuellen Maschine (100) gespeicherten Datei zum Durchführen eines Antivirenscans;
Sammeln (212), durch die geschützte virtuelle Maschine (100), von Daten, die sich auf Merkmale von Rechenressourcen jeder der Mehrzahl schützender virtueller Maschinen (120) beziehen, die jeweils ein Scanmodul (121) aufweisen, wobei die Merkmale von Rechenressourcen jeder der schützenden virtuellen Maschinen (120) zumindest eines oder
mehrere umfassen:

- Zeit zwischen dem Empfang von Dateien und der Verkündung eines Urteils durch jedes Scanmodul (121);
- eine Reihe von erhaltenen Dateien,
- CPU-Auslastung und
- ein Volumen an freiem Speicher;

Bestimmen (213), durch die geschützte virtuelle Maschine (100), einer ersten Näherungszeitfunktion der Merkmale der Rechenressourcen für jede der Mehrzahl schützender virtueller Maschinen (120) basierend auf zumindest den gesammelten Daten;
Sammeln (214), durch die geschützte virtuelle Maschine (100), eines oder mehrerer Parameter, die sich auf einen Antivirenscan des Scanmoduls (121) jeder der schützenden virtuellen Maschinen (120) beziehen, wobei der eine oder die mehreren Parameter zumindest eines der folgenden umfassen:

- Verfahren zum Detektieren schädlicher Dateien, die zum Durchführen des Antivirenscans verwendet werden, und
- Merkmale der Rechenressourcen, die zum Durchführen des Antivirenscans verwendet werden;

Bestimmen (215), durch die geschützte virtuelle Maschine (100), einer zweiten Näherungsfunktion des einen oder der mehreren Parameter, die sich auf den Antivirenscan beziehen, basierend auf zumindest den gesammelten Parametern;
Bestimmen (216) einer Näherungszeitfunktion der Wirksamkeit des Antivirenscans jeder schützenden virtuellen Maschine (120) basierend auf zumindest der ersten Näherungszeitfunktion der Merkmale der Rechenressourcen und der zweiten Näherungsfunktion des einen oder der mehreren Parameter; und
basierend zumindest auf der Näherungszeitfunktion der Wirksamkeit des Antivirenscans, Auswählen (217) zumindest einer schützenden virtuellen Maschine (120) aus der Mehrzahl schützender virtueller Maschinen (120), um den Antivirenscan durchzuführen, um zu bestimmen, ob die zumindest eine Datei schädlich ist.

20. Computerlesbares Medium nach Anspruch 19,
wobei die Näherungszeitfunktion der Merkmale der Rechenressourcen der Mehrzahl schützender virtueller Maschinen (120) zumindest basierend auf den gesammelten Daten, die sich auf die Merkmale der Rechenressourcen jeder schützenden virtuellen Maschine (120) beziehen, Merkmalen der Rechenressourcen jeder schützenden virtuellen Maschine (120), auf die zu einem ausgewählten Zeitpunkt zugegriffen werden kann, dem Zeitpunkt der Bestimmung der Merkmale der Rechenressourcen jeder schützenden virtuellen Maschine und der Zeit bestimmt wird, für die es ist notwendig, die Merkmale der Rechenressourcen jeder schützenden virtuellen Maschine (120) zu bestimmen, und
wobei die Näherungszeitfunktion des einen oder der mehreren Parameter, die sich auf den Antivirenscan beziehen, zumindest basierend auf Daten, die sich auf präsumtive Parameter des Antivirenscans für die Merkmale der Rechenressourcen beziehen, und Merkmalen der Rechenressourcen jeder schützenden virtuellen Maschine (120) zum Durchführen des Antivirenscans bestimmt wird.

**Revendications**

1. Procédé mis en œuvre par ordinateur pour détecter des fichiers malveillants dans un réseau distribué présentant une pluralité de machines virtuelles de protection (120), le procédé comprenant :

   la détermination et l'obtention (211), par une machine virtuelle protégée (100), d'au moins un fichier mis en mémoire sur la machine virtuelle protégée (100) pour effectuer un balayage antivirus ;
   la collecte (212), par la machine virtuelle protégée (100), de données concernant des caractéristiques de ressources informatiques de chacune de la pluralité de machines virtuelles de protection (120), chacune présentant un module de balayage (121), dans lequel les caractéristiques de ressources informatiques de chacune des machines virtuelles de protection (120) comprennent au moins un ou plusieurs éléments parmi :

   - le temps écoulé entre la réception de fichiers et la prononciation d'un verdict par chaque module de balayage (121),
   - un nombre de fichiers obtenus,
   - une charge de CPU, et
   - un volume de mémoire libre ;

   la détermination (213), par la machine virtuelle protégée (100), d'une première fonction temporelle d'approximation des caractéristiques des ressources informatiques pour chacune de la pluralité des machines virtuelles de protection en se basant au moins sur les données collectées ;
   la collecte (214), par la machine virtuelle protégée (100), d'un ou de plusieurs paramètres concernant un balayage antivirus du module de balayage (121) de chacune des machines virtuelles de protection, où le ou plusieurs des paramètres comprennent au moins un élément parmi :

   - des procédés de détection de fichiers malveillants utilisés pour effectuer le balayage antivirus, et
   - des caractéristiques des ressources informatiques utilisées pour effectuer le balayage antivirus ;

   la détermination (215), par la machine virtuelle protégée (100), d'une seconde fonction d'approximation du ou de plusieurs des paramètres concernant le balayage antivirus en se basant au moins sur les paramètres collectés ;
   la détermination (216) d'une fonction temporelle d'approximation de l'efficacité du balayage antivirus de chaque machine virtuelle de protection en se basant au moins sur la première fonction temporelle d'approximation des caractéristiques des ressources informatiques et sur la seconde fonction d'approximation du ou de plusieurs des paramètres ; et
   en se basant au moins sur la fonction temporelle d'approximation d'efficacité du balayage antivirus, la sélection (217) d'au moins une machine virtuelle de protection parmi la pluralité de machines virtuelles de protection pour effectuer le balayage antivirus afin de déterminer si le fichier, au moins au nombre de un, est malveillant.

2. Procédé selon la revendication 1, dans lequel la sélection de la machine virtuelle de protection (120), au moins au nombre de une, comprend la détermination (218) de l'heure de départ la plus efficace pour effectuer le balayage antivirus en remplissant au moins l'un des critères suivants :

   le balayage antivirus prenant le moins de temps ;
   le balayage antivirus prenant moins de temps que prévu ;
   le balayage antivirus qui sera terminé au plus tard à une heure prévue ;
   un nombre minimal de ressources informatiques de la machine virtuelle de protection (120) est nécessaire pour effectuer le balayage antivirus ; ou
   moins de ressources informatiques de la machine virtuelle de protection (120) que prévu sont nécessaires pour effectuer le balayage antivirus.

3. Procédé selon la revendication 1, dans lequel la sélection d'au moins une machine virtuelle de protection (120) comprend les étapes consistant à :

   détecter que la machine virtuelle de protection (120), au moins au nombre de une, est apte à au moins effectuer le balayage antivirus du fichier, au moins au nombre de un, en utilisant des ressources informatiques disponibles dans un laps de temps prévu ;
   détecter la machine virtuelle de protection (120), au moins au nombre de une, ayant le plus petit niveau de charge de travail calculé parmi la pluralité de machines virtuelles de protection (120) du réseau distribué ;
détecter la machine virtuelle de protection (120), au moins au nombre de une, ayant un niveau de charge de travail calculée inférieur à une valeur de seuil établie ; ou
détecter pas moins de deux machines virtuelles de protection (120) de la pluralité des machines virtuelles de protection (120) dont le niveau de charge calculé combiné est inférieur au niveau de charge de travail combiné des machines virtuelles de protection (120) restantes de la pluralité des machines virtuelles de protection (120).

4.  Procédé selon la revendication 1, dans lequel la collecte des données concernant les caractéristiques de ressources informatiques de chacune de la pluralité des machines virtuelles de protection (120) comprend au moins un élément parmi :

    la détection d'une durée entre l'obtention du fichier, au moins au nombre de un, et la détermination permettant de savoir si le fichier, au moins au nombre de un, est malveillant ou pas ;
    la détection d'un nombre de fichiers transmis à la machine virtuelle protégée (100) pour le balayage antivirus ; et
    la détermination d'une capacité informatique de chacune de la pluralité des machines virtuelles de protection (120).

5.  Procédé selon la revendication 1, dans lequel les procédés de détection des fichiers malveillants comprennent au moins un élément parmi : une analyse de signature, une analyse heuristique, une analyse de résultats d'émulation et une analyse de listes noires et blanches.

6.  Procédé selon la revendication 5, dans lequel les procédés de détection des fichiers malveillants sont déterminés en se basant au moins sur la durée maximale pendant laquelle le balayage antivirus a lieu, dans lequel les procédés de détection des fichiers malveillants comprennent une analyse de résultats d'émulation et sont déterminés en se basant sur une profondeur d'émulation des fichiers en cours de balayage, où une profondeur d'émulation est un nombre maximal d'appels imbriqués.

7.  Procédé selon la revendication 1, dans lequel la fonction temporelle d'approximation des caractéristiques des ressources informatiques de la pluralité des machines virtuelles de protection (120) est déterminée en se basant au moins sur les données collectées concernant les caractéristiques des ressources informatiques de chaque machine virtuelle de protection (120), des caractéristiques de ressources informatiques de chaque machine virtuelle de protection (120) qui sont accessibles à une heure sélectionnée, l'heure de détermination de caractéristiques des ressources informatiques de chaque machine virtuelle de protection (120), et la durée pendant laquelle il est nécessaire de déterminer les caractéristiques des ressources informatiques de chaque machine virtuelle de protection (120).

8.  Procédé selon la revendication 1, dans lequel la fonction temporelle d'approximation du ou de plusieurs des paramètres concernant le balayage antivirus est déterminée en se basant au moins sur des données concernant des paramètres présumés du balayage antivirus pour les caractéristiques des ressources informatiques, et des caractéristiques des ressources informatiques de chaque machine virtuelle de protection (120) pour effectuer le balayage antivirus.

9.  Procédé selon la revendication 1, dans lequel la fonction temporelle d'approximation d'efficacité du balayage antivirus est en outre déterminée en se basant sur des paramètres définissant un type et une taille de fichier, au moins au nombre de un.

10. Système pour détecter des fichiers malveillants dans un réseau distribué présentant une pluralité de machines virtuelles de protection (120), le système comprenant :

    une machine virtuelle protégée (100) présentant au moins un client léger (110) fonctionnant dessus, la machine virtuelle protégée (100) étant configurée pour :

    déterminer et obtenir (211) au moins un fichier mis en mémoire sur la machine virtuelle protégée (100) pour effectuer un balayage antivirus ;
    collecter (212) des données concernant des caractéristiques de ressources informatiques de chacune de la pluralité des machines virtuelles de protection (120), chacune présentant un module de balayage (121), les caractéristiques de ressources informatiques de chacune des machines virtuelles de protection (120) comprenant au moins un ou plusieurs éléments parmi :

- le temps écoulé entre la réception de fichiers et la prononciation d'un verdict par chaque module de balayage (121),
- un nombre de fichiers obtenus,
- une charge de CPU, et
- un volume de mémoire libre ;

déterminer (213) une première fonction temporelle d'approximation des caractéristiques des ressources informatiques pour la pluralité de machines virtuelles de protection en se basant au moins sur les données collectées ;

collecter (214) un ou plusieurs paramètres concernant un balayage antivirus du module de balayage (121) de chacune des machines virtuelles de protection, où le ou plusieurs des paramètres comprennent au moins un élément parmi :

- des procédés de détection de fichiers malveillants utilisés pour effectuer le balayage antivirus, et
- des caractéristiques des ressources informatiques utilisées pour effectuer le balayage antivirus ;

déterminer (215) une seconde fonction d'approximation du ou de plusieurs des paramètres concernant le balayage antivirus en se basant au moins sur les paramètres collectés ;

déterminer une fonction temporelle d'approximation d'efficacité du balayage antivirus de chaque machine virtuelle de protection en se basant au moins sur la première fonction temporelle d'approximation des caractéristiques des ressources informatiques et la seconde fonction d'approximation du ou de plusieurs des paramètres ; et

en se basant au moins sur la fonction temporelle d'approximation d'efficacité du balayage antivirus, sélectionner au moins une machine virtuelle de protection (120) parmi la pluralité de machines virtuelles de protection (120) pour effectuer le balayage antivirus afin de déterminer si le fichier, au moins au nombre de un, est malveillant.

**11.** Système de la revendication 10, dans lequel la machine virtuelle protégée (100) est configurée pour sélectionner la machine virtuelle de protection (120), au moins au nombre de une, parmi la pluralité de machines virtuelles de protection (120) pour effectuer le balayage antivirus en déterminant l'heure de départ la plus efficace pour effectuer le balayage antivirus en remplissant au moins l'un des critères suivants :

le balayage antivirus prenant le moins de temps ;
le balayage antivirus prenant moins de temps que prévu ;
le balayage antivirus qui sera terminé au plus tard à une heure prévue ;
un nombre minimal de ressources informatiques de la machine virtuelle de protection (120) est nécessaire pour effectuer le balayage antivirus ; ou
moins de ressources informatiques de la machine virtuelle de protection (120) que prévu sont nécessaires pour effectuer le balayage antivirus.

**12.** Système de la revendication 10, dans lequel la machine virtuelle protégée (100) est configurée pour sélectionner la machine virtuelle de protection (120), au moins au nombre de une, parmi la pluralité de machines virtuelles de protection (120) pour effectuer le balayage antivirus :

en détectant que la machine virtuelle de protection (120), au moins au nombre de une, est apte à au moins effectuer le balayage antivirus du fichier, au moins au nombre de un, en utilisant des ressources informatiques disponibles dans un laps de temps prévu ;
en détectant la machine virtuelle de protection (120), au moins au nombre de une, ayant le plus bas niveau de charge de travail calculé parmi la pluralité de machines virtuelles de protection (120) dans le réseau distribué ;
en détectant la machine virtuelle de protection (120), au moins au nombre de une, ayant un niveau de charge de travail calculé inférieur à une valeur de seuil établie ; ou
en détectant pas moins de deux machines virtuelles de protection (120) de la pluralité de machines virtuelles de protection (120) dont le niveau de charge de travail calculé combiné est inférieur au niveau de charge de travail combiné des machines virtuelles de protection (120) restantes de la pluralité des machines virtuelles de protection (120).

**13.** Système de la revendication 10, dans lequel la machine virtuelle protégée (100) est configurée pour collecter les données concernant les caractéristiques de ressources informatiques de la pluralité des machines virtuelles de protection (120) via au moins un procédé parmi les suivants :

la détection d'une durée entre l'obtention du fichier, au moins au nombre de un, et la détermination permettant de savoir si le fichier, au moins au nombre de un, est malveillant ou pas ;
la détection d'un nombre de fichiers transmis à la machine virtuelle pour le balayage antivirus ; et
la détermination d'une capacité informatique de chacune de la pluralité des machines virtuelles.

14. Système de la revendication 10, dans lequel le ou plusieurs des paramètres concernant le balayage antivirus comprennent au moins un élément parmi :

des procédés pour détecter des fichiers malveillants utilisés par la pluralité de machines virtuelles de protection (120), les procédés comprenant au moins un élément parmi : une analyse de signature, une analyse heuristique, une analyse de résultats d'émulation et une analyse de listes noires et blanches ; et
les caractéristiques de ressources informatiques de la pluralité des machines virtuelles de protection (120) utilisées pour effectuer le balayage antivirus.

15. Système de la revendication 14, dans lequel les procédés pour détecter des fichiers malveillants sont déterminés en se basant au moins sur la durée maximale pendant laquelle le balayage antivirus a lieu, et une profondeur d'émulation de fichiers en cours de balayage, où une profondeur d'émulation est un nombre maximal d'appels imbriqués.

16. Système de la revendication 10, dans lequel la fonction temporelle d'approximation des caractéristiques des ressources informatiques de la pluralité de machines virtuelles de protection (120) est déterminée en se basant au moins sur les données collectées concernant les caractéristiques des ressources informatiques de chaque machine virtuelle de protection (120), des caractéristiques de ressources informatiques de chaque machine virtuelle de protection (120) qui sont accessibles à une heure sélectionnée, l'heure de détermination de caractéristiques des ressources informatiques de chaque machine virtuelle de protection (120), et la durée pendant laquelle il est nécessaire de déterminer les caractéristiques des ressources informatiques de chaque machine virtuelle de protection (120).

17. Système de la revendication 10, dans lequel la fonction temporelle d'approximation du ou de plusieurs des paramètres concernant le balayage antivirus est déterminée en se basant au moins sur des données concernant des paramètres présumés du balayage antivirus pour les caractéristiques des ressources informatiques, et des caractéristiques des ressources informatiques de chaque machine virtuelle de protection (120) pour effectuer le balayage antivirus.

18. Système de la revendication 10, dans lequel la fonction temporelle d'approximation d'efficacité du balayage antivirus est en outre déterminée en se basant sur des paramètres définissant un type et une taille du fichier, au moins au nombre de un.

19. Support non transitoire lisible sur ordinateur stockant des instructions exécutables par ordinateur pour détecter des fichiers malveillants d'un réseau distribué présentant une pluralité de machines virtuelles de protection (120), incluant des instructions pour :

déterminer et obtenir (211), par une machine virtuelle protégée (100), au moins un fichier stocké sur la machine virtuelle protégée (100) pour effectuer un balayage antivirus ;
collecter (212), par la machine virtuelle protégée (100), des données concernant des caractéristiques de ressources informatiques de chacune de la pluralité des machines virtuelles de protection (120), chacune présentant un module de balayage (121), où les caractéristiques de ressources informatiques de chacune des machines virtuelles de protection (120) comprennent au moins un ou plusieurs éléments parmi :

- le temps écoulé entre la réception de fichiers et la prononciation d'un verdict par chaque module de balayage (121),
- un nombre de fichiers obtenus,
- une charge de CPU, et
- un volume de mémoire libre ;

déterminer (213), par la machine virtuelle protégée (100), une première fonction temporelle d'approximation des caractéristiques des ressources informatiques pour chacune de la pluralité de machines virtuelles de protection (120) en se basant au moins sur les données collectées ;

collecter (214), par la machine virtuelle protégée (100), un ou plusieurs paramètres concernant un balayage antivirus du module de balayage (121) de chacune des machines virtuelles de protection (120),

le ou plusieurs des paramètres comprenant au moins un élément parmi :

- des procédés de détection de fichiers malveillants utilisés pour effectuer un balayage antivirus, et
- des caractéristiques des ressources informatiques utilisées pour effectuer le balayage antivirus ;

déterminer (215), par la machine virtuelle protégée (100), une seconde fonction d'approximation du ou de plusieurs des paramètres concernant le balayage antivirus en se basant au moins sur les paramètres collectés ;

déterminer (216) une fonction temporelle d'approximation d'efficacité du balayage antivirus de chaque machine virtuelle de protection (120) en se basant au moins sur la première fonction temporelle d'approximation des caractéristiques des ressources informatiques et sur la seconde fonction d'approximation du ou de plusieurs des paramètres ; et

en se basant au moins sur la fonction temporelle d'approximation d'efficacité du balayage antivirus, sélectionner (217) au moins une machine virtuelle de protection (120) parmi la pluralité de machines virtuelles de protection (120) pour effectuer le balayage antivirus afin de déterminer si le fichier, au moins au nombre de un, est malveillant.

**20.** Support lisible sur ordinateur de la revendication 19, dans lequel la fonction temporelle d'approximation des caractéristiques des ressources informatiques de la pluralité des machines virtuelles de protection (120) est déterminée en se basant au moins sur les données collectées concernant les caractéristiques des ressources informatiques de chaque machine virtuelle de protection (120), des caractéristiques de ressources informatiques de chaque machine virtuelle de protection (120) qui sont accessibles à une heure sélectionnée, l'heure de détermination de caractéristiques des ressources informatiques de chaque machine virtuelle de protection (120), et la durée pendant laquelle il est nécessaire de déterminer les caractéristiques des ressources informatiques de chaque machine virtuelle, et

dans lequel la fonction temporelle d'approximation du ou de plusieurs des paramètres concernant le balayage antivirus est déterminée en se basant au moins sur des données concernant des paramètres présumés du balayage antivirus pour les caractéristiques des ressources informatiques, et des caractéristiques des ressources informatiques de chaque machine virtuelle de protection (120) pour effectuer le balayage antivirus.

**120**

Protecting virtual machine #N

Protecting virtual machine #2

Protecting virtual machine #1

**121**

Scanning module

**100**

Protected virtual machine

**110**

Thin client

**112**

Dynamic Computing Module

**113**

Selection module

**111**

Collecting module

**114**

Task Forming module

**101**

# FIG.1

**211**

Determine files to performe
antivirus scan on

**212**

Gather characteristic of
computing resources

**214**

Gather parameters of
antivirus scan

**213**

Determine proximation time
function of characteristics
of computing resources

**215**

Determine approximation function
of parameters of antivirus scan
in dependence on characteristics
of computing resources

**216**

Determine approximation time
function of effectiveness
of antivirus scan

**217**

Select scanning means

**222**

Pronounce verdict on dection
of malicious file

**218**

Determine most effective start time
for performing antivirus scan

**221**

Perform antivirus scan

# FIG.2

FIG.3

EP 3 246 842 B1

FIG.4

EP 3 246 842 B1

EP 3 246 842 B1

| system memory | 22 |
| --- | --- |

| ROM | 24 |
| --- | --- |
| BIOS | 26 |

| RAM | 25 |
| --- | --- |
| operating system | 35 |
| file system | 36 |
| applications | 37 |
| other program modules | 38 |
| program data | 39 |

processor **21**

video adapter **48**

controller **55**

monitor **47**

system bus **23**

| hard disk interface 32 | magnetic disk interface 33 | optical drive interface 34 | serial port 46 | network interface 51 |
| --- | --- | --- | --- | --- |

data storage device **56**

**27**

**28**

**29**

**30**

**31**

local-area network **50**

modem **54**

keyboard **40**

mouse **42**

remote computer(s) **49**

**27**

applications **37'**

| operating system 35 file system 36 | applications 37 | other program modules 38 | program data 39 |
| --- | --- | --- | --- |

FIG.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012192276 A1
- US 8370943 B1
- US 9088618 B1